# EUROPEAN PATENT SPECIFICATION

(11) **EP 4 557 820 B1**
(45) Date of publication and mention of the grant of the patent: **11.11.2026**
(21) Application number: 25167955.1
(22) Date of filing: 25.11.2020
(51) Int. Cl.: H04B 7/0413, H04W 16/06, H04L 5/00, H04W 28/06, H04B 7/0452, H04B 7/024, H04B 7/06

(54) **COMMUNICATION APPARATUS AND COMMUNICATION METHOD FOR CONTROL SIGNALING**
KOMMUNIKATIONSVORRICHTUNG UND KOMMUNIKATIONSVERFAHREN ZUR STEUERSIGNALISIERUNG
APPAREIL DE COMMUNICATION ET PROCÉDÉ DE COMMUNICATION POUR SIGNALISATION DE COMMANDE

(30) Priority: 14.02.2020 SG 10202001391S
(43) Date of publication of application: 21.05.2025
(62) Document number(s) of the earlier application(s) in accordance with Art. 76 EPC: 20918639.4 / 4 104 300
(73) Proprietor: Panasonic Intellectual Property Corporation of America, Torrance, CA 90504 (US)
(72) Inventor: HUANG, Lei, 469332 Singapore (SG); URABE, Yoshio, Osaka, 571-0057 (JP); CHITRAKAR, Rojan, 469332 Signapore (SG)
(74) Representative: Grünecker Patent- und Rechtsanwälte PartG mbB

(56) References cited:
- WO-A2-2019/089598
- US-A1- 2019 215 037
- SAMEER VERMANI (QUALCOMM): "PPDU Types and U-SIG Content", vol. 802.11 EHT; 802.11be, no. 2, 16 January 2020 (2020-01-16), pages 1 - 24, XP068165433, Retrieved from the Internet <URL:https://mentor.ieee.org/802.11/dcn/20/11-20-0049-02-00be-ppdu-types-and-u-sig-content.pptx> [retrieved on 20200116]
- DONGGUK LIM (LGE): "Consideration for EHT-SIG transmission", vol. 802.11 EHT; 802.11be, 13 January 2020 (2020-01-13), pages 1 - 17, XP068165130, Retrieved from the Internet <URL:https://mentor.ieee.org/802.11/dcn/20/11-20-0020-00-00be-consideration-for-eht-sig-transmission.pptx> [retrieved on 20200113]

## Description

### TECHNICAL FIELD

The present disclosure relates integrated circuits of an access point.

### BACKGROUND

In the standardization of next generation wireless local area network (WLAN), a new radio access technology having backward compatibilities with IEEE 802.11a/b/g/n/ac/ax technologies has been discussed in the IEEE 802.11 Working Group and is named IEEE 802.11be Extremely High Throughput (EHT) WLAN.

In 802.11be EHT WLAN, in order to provide significant peak throughput and capacity increase beyond 802.11ax high efficiency (HE) WLAN, it is desired to increase the maximum channel bandwidth from 160MHz to 320MHz, increase the maximum number of spatial streams from 8 to 16 and to support multi-link operation. Further, in order to improve spectral efficiency over 11ax HE WLAN, it has been proposed to allow preamble puncturing for a physical layer protocol data unit (PPDU) transmitted to a single communication apparatus or multiple communication apparatuses.

However, there has been no much discussion on communication apparatuses and methods for control signaling, specifically on efficient signaling support for preamble puncturing for a PPDU transmitted to a single communication apparatus or multiple communication apparatuses in the context of EHT WLAN.

There is thus a need for communication apparatuses and methods that provide feasible technical solutions for control signaling in the context of EHT WLAN. Furthermore, other desirable features and characteristics will become apparent from the subsequent detailed description and the appended claims, taken in conjunction with the accompanying drawings and this background of the disclosure.
US 2019/215037 A1 relates to Null Data Packet Sounding for preamble punctured Physical Layer Convergence Procedure Protocol Data Unit (PPDU) for efficient use of a wireless channel bandwidth where a primary service co-exists.
SAMEER VERMANI (QUALCOMM): "PPDU Types and U-SIG Content", IEEE DRAFT; vol 802.11 EHT: 80211be, no. 2, 16 January 2020, pages 1-24, is a document covering the U-SIG content and a PPDU format design for EHT, and, among others, proposing compressed modes for MU PPDU and specific fields in the U-SIG and part of the common field in the EGT-SIG.
WO 2019/089598 A2 provides techniques for preamble puncturing in wireless local area networks (WLANs). In one implementation, an AP can identify a single user (SU) preamble puncture transmission, and can signal in a common portion of a SIG-B field of a multi-user (MU) PPDU format that a resource unit (RU) size is assigned to a same user to indicate the SU preamble puncture transmission.
DONGGUK LIM (LGE): "Consideration for EHT-SIG transmission", IEEE DRAFT; vol. 802.11 EHT; 802.11be 13 January 2020, pages 1-17, discusses EHT-SIG content channel options for supporting of flexible preamble puncturing and reduction of signaling overhead. Among others, this document teaches to indicate preamble puncturing by using the BW field in the U-SIG and pattern information in the EHT-SIG.

### SUMMARY

The present application provides communication apparatuses and communication methods for control signaling in context of EHT WLAN. The scope of the present invention is defined and limited by the appended claims. Examples, aspect and embodiments not necessarily falling under the scope of the claims are provided in the application to better understand the invention

### BRIEF DESCRIPTION OF THE DRAWINGS

Aspects of the disclosure will be better understood and readily apparent to one of ordinary skilled in the art from the following written description, by way of example only, and in conjunction with the drawings, in which:
Fig. 1A depicts a schematic diagram of uplink and downlink single-user (SU) multiple input multiple output (MIMO) communication between an access point (AP) and a station (STA) in a MIMO wireless network.
Fig. 1B depicts a schematic diagram of downlink multi-user (MU) communication between an AP and multiple STAs in a MIMO wireless network.
Fig. 1C depicts a schematic diagram of trigger-based uplink MU communication between an AP and multiple STAs in a MIMO wireless network.
Fig. 1D depicts a schematic diagram of trigger-based downlink multi-AP communication between multiple APs and a STA in a MIMO wireless network.
Fig. 2A depicts an example format of a PPDU (physical layer protocol data unit) used for uplink and downlink SU communications between an AP and a STA in an HE WLAN.
Fig. 2B depicts an example format of a PPDU used for downlink MU communications between an AP and multiples STAs in an HE WLAN.
Fig. 2C depicts the HE-SIG-B field in more details.
Fig. 2D depicts an example format of a PPDU used for trigger-based uplink MU communications between an AP and multiple STAs in an HE WLAN.
Fig. 3A shows a schematic example of communication apparatus in accordance with various aspects. The communication apparatus may be implemented as an AP or a STA and configured for control signaling in accordance with the present disclosure.
Fig. 3B shows a flow diagram illustrating a communication method according to the present disclosure.
Fig. 4 depicts a flow chart illustrating a downlink communication according to various aspects.
Fig. 5A depicts an example format of an EHT basic PPDU for non-trigger-based communications.
Fig. 5B depicts an example of transmission of U-SIG field.
Fig. 5C shows a table of how the number of EHT-SIG content channels depends on the bandwidth and the value of L.
Fig. 5D shows a diagram of mapping of one or two EHT-SIG content channels when a 40MHz EHT basic PPDU is transmitted to multiple STAs.
Fig. 5E shows a diagram of mapping of two EHT-SIG content channels when an 80MHz EHT basic PPDU is transmitted to multiple STAs.
Fig. 5F shows a diagram of mapping of two EHT-SIG content channels in an 80+80MHz or 160MHz EHT basic PPDU is transmitted to multiple STAs.
Fig. 5G shows a diagram of mapping of two EHT-SIG content channels when a 160+80MHz or 240MHz EHT basic PPDU is transmitted to multiple STAs.
Fig. 5H shows a diagram of mapping of two EHT-SIG content channels when a 160+160MHz or 320MHz EHT basic PPDU is transmitted to multiple STAs.
Fig. 6 depicts a flow diagram illustrating processing of a received EHT basic PPDU in an AP or a STA according to a first aspect.
Figs 7A and 7B depict example formats of EHT-SIG content channel.
Fig. 8 depicts a flow diagram illustrating processing of a received EHT basic PPDU in an AP or a STA according to a second aspect.
Fig. 9A and 9B depict a flow diagram illustrating processing of a received EHT basic PPDU in an AP or a STA according to a third aspect.
Fig. 10 depicts an example format of an EHT TB PPDU.
Fig. 11 shows a configuration of a communication device, for example an AP according to the present disclosure.
Fig. 12 shows a configuration of a communication device, for example an STA, according to the present disclosure.

Skilled artisans will appreciate that elements in the figures are illustrated for simplicity and clarity and have not necessarily been depicted to scale. For example, the dimensions of some of the elements in the illustrations, block diagrams or flowcharts may be exaggerated in respect to other elements to help an accurate understanding of the present aspects.

### DETAILED DESCRIPTION

Some aspects of the present disclosure will be described, by way of example only, with reference to the drawings. Like reference numerals and characters in the drawings refer to like elements or equivalents.

In the following paragraphs, certain exemplifying aspects are explained with reference to an access point (AP) and a station (STA) for uplink or downlink control signaling, especially in a multiple-input multiple-output (MIMO) wireless network.

In the context of IEEE 802.11 (Wi-Fi) technologies, a station, which is interchangeably referred to as a STA, is a communication apparatus that has the capability to use the 802.11 protocol. Based on the IEEE 802.11-2016 definition, a STA can be any device that contains an IEEE 802.11-conformant media access control (MAC) and physical layer (PHY) interface to the wireless medium (WM).

For example, a STA may be a laptop, a desktop personal computer (PC), a personal digital assistant (PDA), an access point or a Wi-Fi phone in a wireless local area network (WLAN) environment. The STA may be fixed or mobile. In the WLAN environment, the terms "STA", "wireless client", "user", "user device", and "node" are often used interchangeably.

Likewise, an AP, which may be interchangeably referred to as a wireless access point (WAP) in the context of IEEE 802.11 (Wi-Fi) technologies, is a communication apparatus that allows STAs in a WLAN to connect to a wired network. The AP usually connects to a router (via a wired network) as a standalone device, but it can also be integrated with or employed in the router.

As mentioned above, a STA in a WLAN may work as an AP at a different occasion, and vice versa. This is because communication apparatuses in the context of IEEE 802.11 (Wi-Fi) technologies may include both STA hardware components and AP hardware components. In this manner, the communication apparatuses may switch between a STA mode and an AP mode, based on actual WLAN conditions and/or requirements.

In a MIMO wireless network, "multiple" refers to multiple antennas used simultaneously for transmission and multiple antennas used simultaneously for reception, over a radio channel. In this regard, "multiple-input" refers to multiple transmitter antennas, which input a radio signal into the channel, and "multiple-output" refers to multiple receiver antennas, which receive the radio signal from the channel and into the receiver. For example, in an N × M MIMO network system, N is the number of transmitter antennas, M is the number of receiver antennas, and N may or may not be equal to M. For the sake of simplicity, the respective numbers of transmitter antennas and receiver antennas are not discussed further in the present disclosure.

In a MIMO wireless network, single-user (SU) communications and multi-user (MU) communications can be deployed for communications between communication apparatuses such as APs and STAs. MIMO wireless network has benefits like spatial multiplexing and spatial diversity, which enable higher data rates and robustness through the use of multiple spatial streams. According to various aspects, the term "spatial stream" may be used interchangeably with the term "space-time stream" (or STS).

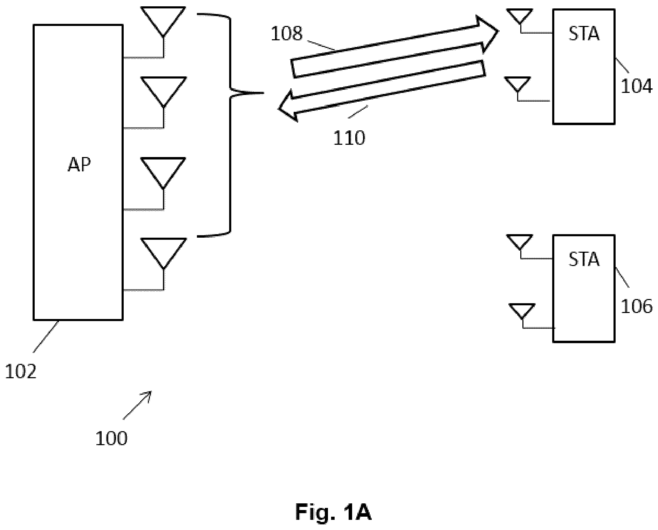

Fig. 1A depicts a schematic diagram of SU communication 100 between an AP 102 and a STA 104 in a MIMO wireless network. As shown, the MIMO wireless network may include one or more STAs (e.g. STA 104, STA 106, etc.). If the SU communication 100 in a channel is carried out over whole channel bandwidth, it is called full bandwidth SU communication. If the SU communication 100 in a channel is carried out over a part of the channel bandwidth (e.g. one or more 20MHz subchannels within the channel is punctured), it is called punctured SU communication. In the SU communication 100, the AP 102 transmits multiple space-time streams using multiple antennas (e.g. four antennas as shown in Fig. 1A) with all the space-time streams directed to a single communication apparatus, i.e. the STA 104. For the sake of simplicity, the multiple space-time streams directed to the STA 104 are illustrated as a grouped data transmission arrow 108 directed to the STA 104.

The SU communication 100 can be configured for bi-directional transmissions. As shown in Fig. 1A, in the SU communication 100, the STA 104 may transmit multiple space-time streams using multiple antennas (e.g. two antennas as shown in Fig. 1A) with all the space-time streams directed to the AP 102. For the sake of simplicity, the multiple space-time streams directed to the AP 102 are illustrated as a grouped data transmission arrow 110 directed to the AP 102.

As such, the SU communication 100 depicted in Fig. 1A enables both uplink and downlink SU transmissions in a MIMO wireless network.

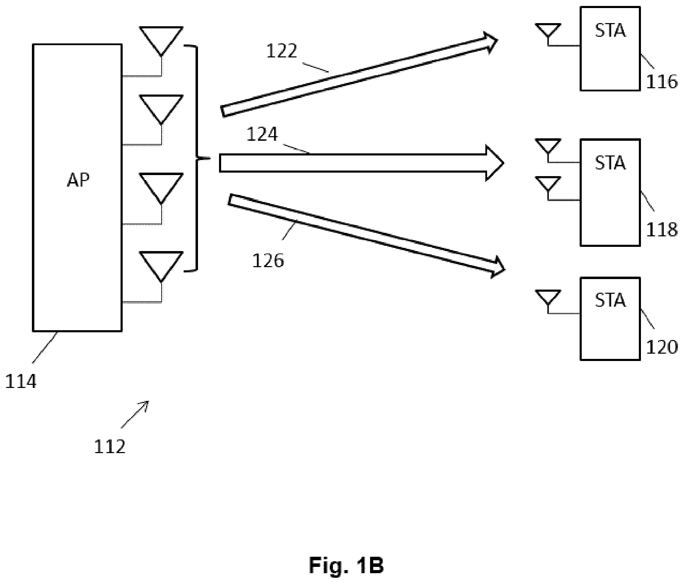

Fig. 1B depicts a schematic diagram of downlink MU communication 112 between an AP 114 and multiple STAs 116, 118, 120 in a MIMO wireless network. The MIMO wireless network may include one or more STAs (e.g. STA 116, STA 118, STA 120, etc.). The MU communication 112 can be an OFDMA (orthogonal frequency division multiple access) communications or a MU-MIMO communication. For an OFDMA communication in a channel, the AP 114 transmits multiple streams simultaneously to the STAs 116, 118, 120 in the network at different resource units (RUs) within the channel bandwidth. For a MU-MIMO communication in a channel, the AP 114 transmits multiple streams simultaneously to the STAs 116, 118, 120 at same RU(s) within the channel bandwidth using multiple antennas via spatial mapping or precoding techniques. If the RU(s) at which the OFDMA or MU-MIMO communication occurs occupy whole channel bandwidth, the OFDMA or MU-MIMO communications is called full bandwidth OFDMA or MU-MIMO communications. If the RU(s) at which the OFDMA or MU-MIMO communication occurs occupy a part of channel bandwidth (e.g. one or more 20MHz subchannel within the channel is punctured), the OFDMA or MU-MIMO communication is called punctured OFDMA or MU-MIMO communications. For example, two space-time streams may be directed to the STA 118, another space-time stream may be directed to the STA 116, and yet another space-time stream may be directed to the STA 120. For the sake of simplicity, the two space-time streams directed to the STA 118 are illustrated as a grouped data transmission arrow 124, the space-time stream directed to the STA 116 is illustrated as a data transmission arrow 122, and the space-time stream directed to the STA 120 is illustrated as a data transmission arrow 126.

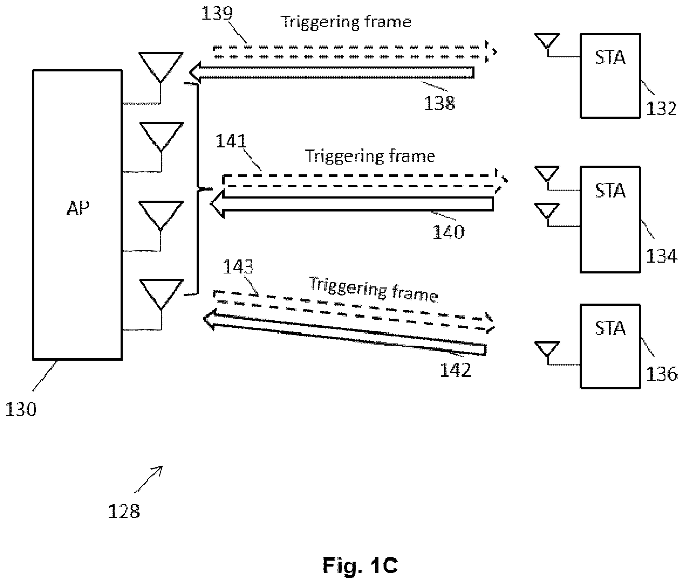

To enable uplink MU transmissions, trigger-based communication is provided to the MIMO wireless network. In this regard, Fig. 1C depicts a schematic diagram of trigger-based uplink MU communication 128 between an AP 130 and multiple STAs 132, 134, 136 in a MIMO wireless network.

Since there are multiple STAs 132, 134, 136 participating in the trigger-based uplink MU communication, the AP 130 needs to coordinate simultaneous transmissions of multiple STAs 132, 134, 136.

To do so, as shown in Fig. 1C, the AP 130 transmits triggering frames 139, 141, 143 simultaneously to STAs 132, 134, 136 to indicate user-specific resource allocation information (e.g. the number of space-time streams, a starting STS number and the allocated RUs) each STA can use. In response to the triggering frames, STAs 132, 134, 136 may then transmit their respective space-time streams simultaneously to the AP 130 according to the user-specific resource allocation information indicated in the triggering frames 139, 141, 143. For example, two space-time streams may be directed to the AP 130 from STA 134, another space-time stream may be directed to the AP 130 from STA 132, and yet another space-time stream may be directed to the AP 130 from STA 136. For the sake of simplicity, the two space-time streams directed to the AP 130 from STA 134 are illustrated as a grouped data transmission arrow 140, the space-time stream directed to the AP 130 from STA 132 is illustrated as a data transmission arrow 138, and the space-time stream directed to the AP 130 from STA 136 is illustrated as a data transmission arrow 142.

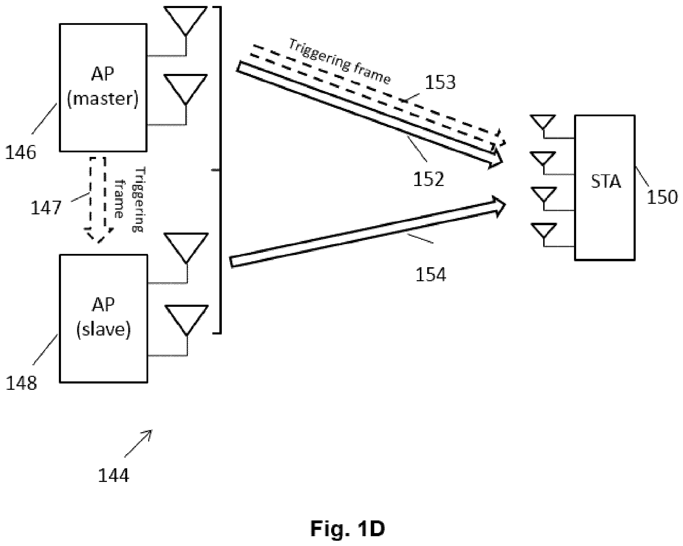

Trigger-based communication is also provided to the MIMO wireless network to enable downlink multi-AP communication. In this regard, Fig. 1D depicts a schematic diagram of downlink multi-AP communication 144, between a STA 150 and multiple APs 146, 148 in a MIMO wireless network.

Since there are multiple APs 146, 148 participating in the trigger-based downlink multi-AP MIMO communication, the master AP 146 needs to coordinate simultaneous transmissions of multiple APs 146, 148.

To do so, as shown in Fig. 1D, the master AP 146 transmits triggering frames 147, 153 simultaneously to the AP 148 and the STA 150 to indicate AP-specific resource allocation information (e.g. the number of space-time streams, a starting STS stream number and the allocated RUs) each AP can use. In response to the triggering frames, the multiple APs 146, 148 may then transmit respective space-time streams to the STA 150 according to the AP-specific resource allocation information indicated in the triggering frame 147; and the STA 150 may then receive all the space-time streams according to the AP-specific resource allocation information indicated in the triggering frame 153. For example, two space-time streams may be directed to the STA 150 from AP 146, and another two space-time streams may be directed to the STA 150 from AP 148. For the sake of simplicity, the two space-time streams directed to the STA 150 from AP 146 are illustrated as a grouped data transmission arrow 152, and the two space-time streams directed to the STA 150 from the AP 148 is illustrated as a grouped data transmission arrow 154.

Due to packet/PPDU (physical layer protocol data unit) based transmission and distributed MAC (medium access control) scheme in 802.11 WLAN, time scheduling (e.g. TDMA (time division multiple access)-like periodic time slot assignment for data transmission) does not exist in 802.11 WLAN. Frequency and spatial resource scheduling is performed on a packet basis. In other words, resource allocation information is on a PPDU basis.

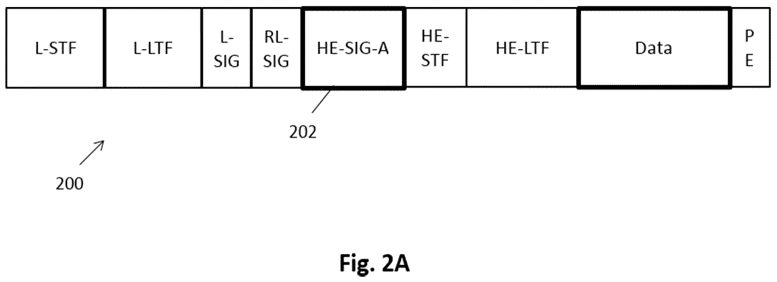

Fig. 2A depicts an example format of a PPDU 200 used for SU communications between an AP and a STA in a HE WLAN. Such a PPDU 200 is referred to as an HE SU PPDU 200. The HE SU PPDU 156 may include a non-High Throughput Short Training Field (L-STF), a non-High Throughput Long Training Field (L-LTF), a non-High Throughput SIGNAL (L-SIG) field, a Repeated L-SIG (RL-SIG) field, a HE SIGNAL A (HE-SIG-A) field 202, a HE Short Training Field (HE-STF), a HE Long Training Field (HE-LTF), a Data field and a Packet Extension (PE) field. The RL-SIG field is mainly used for identifying the format of an HE PPDU. The HE-SIG-A field 202 contains the necessary control information for decoding the Data field, such as uplink/downlink, modulation and coding scheme (MCS) and bandwidth (BW).

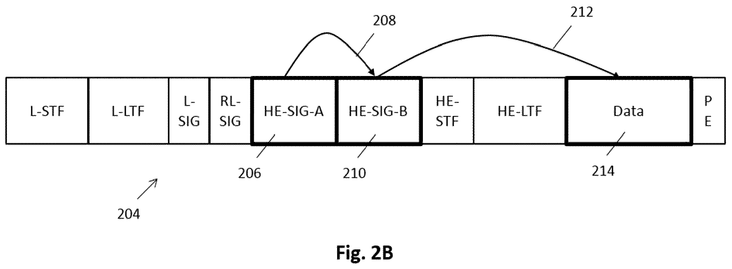

Fig. 2B shows an example format of a PPDU 204 used for downlink MU communications between an AP and multiple STAs in a HE WLAN, e.g. OFDMA transmission and full bandwidth MU-MIMO transmission. Such a PPDU 204 is referred to as an HE MU PPDU 204. A HE MU PPDU may have a similar format as HE SU PPDU but include a HE SIGNAL B (HE-SIG-B) field 210. In particular, the HE MU PPDU 204 may include a L-STF, L-LTF, L-SIG, R-SIG, HE-SIG-A field 206, HE-SIG-B field 210, a HE-STF, a HE-LTF, a Data field 214 and a PE field. In the HE MU PPDU 204, the HE-SIG-B field 210 provides the OFDMA and MU-MIMO resource allocation information to allow STAs to look up the corresponding resources to be used in the Data field 170, like indicated by an arrow 212. The HE-SIG-A field 206 contains the necessary information for decoding the HE-SIG-B field 210, e.g. MCS for HE-SIG-B, number of HE-SIG-B symbols, like indicated by an arrow 208.

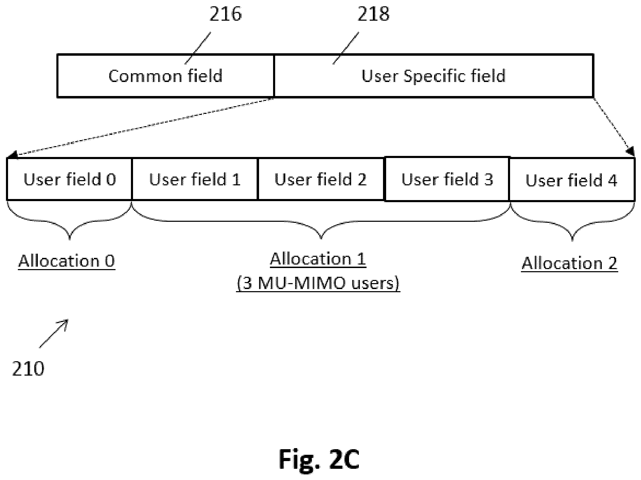

Fig. 2C depicts the HE-SIG-B field 210 in more detail. The HE-SIG-B field 210 includes (or consists of) a Common field 216, if present, followed by a User Specific field 218 which together are referred to as the HE-SIG-B content channel. The HE-SIG-B field 210 contains a RU Allocation subfield which indicates the RU information for each of the allocations. The RU information includes a RU position in the frequency domain, an indication of the RU allocated for a non-MU-MIMO or MU-MIMO allocation, and the number of users in the MU-MIMO allocation. The Common field 216 is not present in the case of a full bandwidth MU-MIMO transmission. In this case, the RU information (e.g. the number of users in the MU-MIMO allocation) is indicated in the HE-SIG-A field 162.

The User Specific field 218 includes (or consists of) one or more User field(s) for non-MU-MIMO allocation(s) and/or MU-MIMO allocation(s). A User field contains user information indicating a user-specific allocation (i.e. user-specific allocation information). In the example shown in Fig. 2C, the User Specific field 218 includes five user fields (User field 0, ... , User field 4), wherein user-specific allocation information for an allocation (Allocation 0) is provided by User field 0, user-specific allocation information for a further allocation (Allocation 1 with 3 MU-MIMO users) is provided by User field 1, User field 2, and User field 3, and user-specific allocation information for yet a further allocation (Allocation 2) is provided by User field 4.

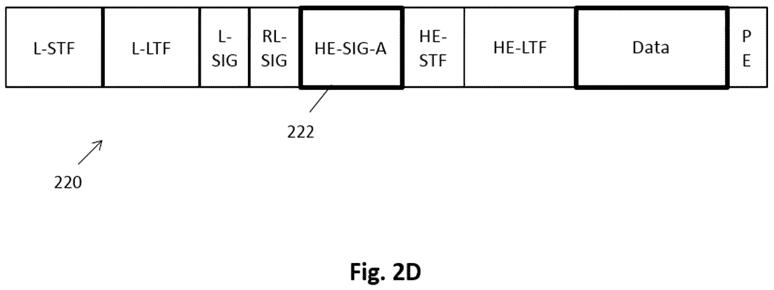

Fig. 2D shows a format of a PPDU 220 used for uplink MU communications between an AP and multiple STAs in a HE WLAN. Such a PPDU 220 is referred to as an HE TB (trigger-based) PPDU 220. A HE TB PPDU may have a similar format as HE SU PPDU. In particular, the HE TB PPDU 220 may include a L-STF, a L-LTF, a L-SIG field, a RL-SIG field, a HE-SIG-A field 222, a HE-STF, a HE-LTF, a Data field and a PE field. The HE-STF of HE TB PPDU 220 has a duration of 8 µs. The HE TB PPDU 220 is used for uplink MU transmission that is in response to a triggering frame. Instead of using the HE-SIG-B field, the information required for the uplink MU transmission from one or more STAs is carried by the triggering frame that solicits this transmission. In a typical transmission of the HE TB PPDU 220, HE-SIG-A related information is copied from the soliciting triggering frame into the HE-SIG-A field 222 of the HE TB PPDU 220.

In 11ax HE WLAN, only preamble puncturing for a PPDU transmitted to multiple STAs is allowed. With the increase in the maximum channel bandwidth from 160MHz to 320MHz, it is an object of present disclosure to substantially overcome the existing challenges to provide communication apparatuses and methods for control signaling that allow preamble puncturing for a PPDU transmitted to a single STA or multiple STAs in order to improve spectral efficiency of EHT WLAN over 11ax HE WLAN. In particular, preamble puncturing for a PPDU used for SU, MU-MIMO or OFDMA transmission is provided in the present disclosure. According to various aspects, the term "preamble puncturing" may be used interchangeably with the term "channel puncturing".

According to various aspects, EHT WLAN supports non-trigger-based communications as illustrated in Fig. 1A and Fig. 1B and trigger-based communications as illustrated in Fig. 1C and Fig. 1D. In non-trigger-based communications, a communication apparatus transmits a PPDU to one other communication apparatus or more than one other communication apparatuses in an unsolicited manner. In trigger-based communications, a communication apparatus transmits a PPDU to one other communication apparatus or more than one other communication apparatuses only after a soliciting triggering frame is received.

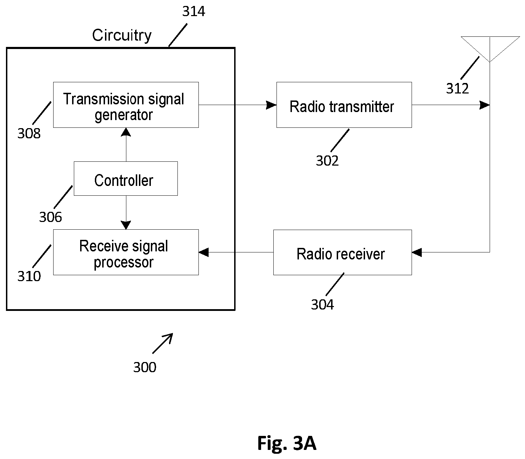

FIG. 3A shows a schematic, partially sectioned view of a communication apparatus 300 according to the present disclosure. The communication apparatus 300 may be implemented as an AP or an STA.

As shown in Fig. 3A, the communication apparatus 300 may include circuitry 314, at least one radio transmitter 302, at least one radio receiver 304, and at least one antenna 312 (for the sake of simplicity, only one antenna is depicted in Fig. 3A for illustration purposes). The circuitry 314 may include at least one controller 306 for use in software and hardware aided execution of tasks that the at least one controller 306 is designed to perform, including control of communications with one or more other communication apparatuses in a MIMO wireless network. The circuitry 314 may furthermore include at least one transmission signal generator 308 and at least one receive signal processor 310. The at least one controller 306 may control the at least one transmission signal generator 308 for generating PPDUs (for example PPDUs used for non-trigger-based communications or PPDUs used for trigger-based multi-AP joint transmission if the communication apparatus 300 is an AP, and for example PPDUs used for non-trigger-based communications or PPDUs used for trigger-based uplink transmissions if the communication apparatus 300 is a STA) to be sent through the at least one radio transmitter 302 to one or more other communication apparatuses and the at least one receive signal processor 310 for processing PPDUs (for example PPDUs used for non-trigger-based communications or PPDUs used for trigger-based uplink transmissions if the communication apparatus 300 is an AP, and for example PPDUs used for non-trigger-based communications or PPDUs used for trigger-based multi-AP joint transmission if the communication apparatus 300 is a STA) received through the at least one radio receiver 304 from the one or more other communication apparatuses under the control of the at least one controller 306. The at least one transmission signal generator 308 and the at least one receive signal processor 310 may be stand-alone modules of the communication apparatus 300 that communicate with the at least one controller 306 for the above-mentioned functions, as shown in Fig. 3A. Alternatively, the at least one transmission signal generator 308 and the at least one receive signal processor 310 may be included in the at least one controller 306. It is appreciable to those skilled in the art that the arrangement of these functional modules is flexible and may vary depending on the practical needs and/or requirements. The data processing, storage and other relevant control apparatus can be provided on an appropriate circuit board and/or in chipsets. In various aspects, when in operation, the at least one radio transmitter 302, at least one radio receiver 304, and at least one antenna 312 may be controlled by the at least one controller 306.

The communication apparatus 300, when in operation, provides functions required for control signaling in non-trigger-based communications and trigger-based communications. For example, the communication apparatus 300 may be an AP, and the circuitry 314 (for example the at least one transmission signal generator 308 of the circuitry 314) may, in operation, generate a transmission signal (for example a PPDU used for non-trigger-based communications or a PPDU used for trigger-based multi-AP joint transmission) comprising a first signal field and a second signal field, wherein the first signal field comprises punctured channel information and the second signal field comprises supplemental punctured channel information, wherein when the transmission signal is used for punctured SU or MU-MIMO transmission and the punctured channel information is able to indicate a channel puncturing pattern that is applied to the transmission signal, the second signal field does not comprise the supplemental punctured channel information. The radio transmitter 302 may in operation, transmit the generated transmission signal to one or more other communication apparatuses.

The communication apparatus 300 may be a STA, and the radio receiver 304 may, in operation, receive a transmission signal (for example an PPDU used for non-trigger-based communications or a PPDU used for trigger-based multi-AP joint transmission) comprising a first signal field and a second signal field, wherein the first signal field comprises punctured channel information and the second signal field comprises supplemental punctured channel information, wherein when the transmission signal is used for punctured SU or MU-MIMO transmission and the punctured channel information is able to indicate a channel puncturing pattern that is applied to the transmission signal, the second signal field does not comprise the supplemental punctured channel information. The circuitry 314 (for example the at least one receive signal processor 310 of the circuitry 314) may, in operation, process the received transmission signal.

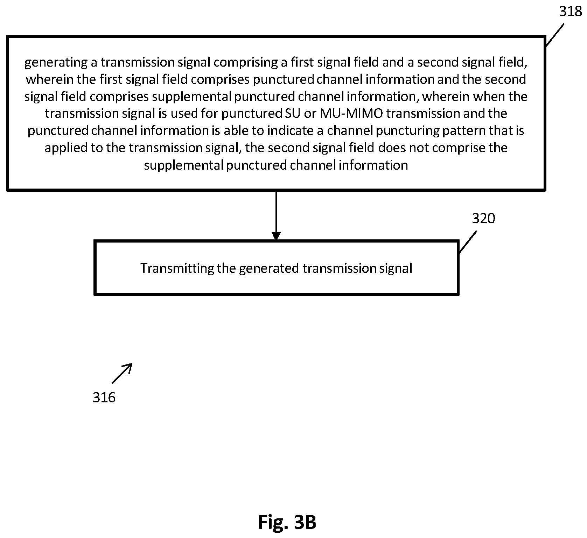

Fig. 3B shows a flow diagram 316 illustrating a communication method for transmitting generated transmission signal according to the present disclosure. In step 318, a transmission signal is generated, the transmission signal (for example a PPDU used for non-trigger-based communications or a PPDU used for trigger-based multi-AP joint transmission) comprising a first signal field and a second signal field, wherein the first signal field comprises punctured channel information and the second signal field comprises supplemental punctured channel information, wherein when the transmission signal is used for punctured SU or MU-MIMO transmission and the punctured channel information is able to indicate a channel puncturing pattern that is applied to the transmission signal, the second signal field does not comprise the supplemental punctured channel information. In step 320, the generated transmission signal is transmitted to one or more other communication apparatuses.

In various aspects, wherein when the transmission signal is used for punctured SU or MU-MIMO transmission and the punctured channel information is not able to indicate a channel puncturing pattern that is applied to the transmission signal, the second signal field comprises the supplemental punctured channel information that, together with the punctured channel information, indicates a channel puncturing pattern that is applied to the transmission signal. According to an aspect of present disclosure, wherein when the transmission signal is used for punctured OFDMA transmission and the punctured channel information is not able to indicate a channel puncturing pattern that is applied to the transmission signal, the second signal field comprises the supplemental punctured channel information that, together with the punctured channel information, indicates the channel puncturing pattern that is applied to the transmission signal. In an aspect, the punctured channel information is able to indicate all channel puncturing patterns that are allowed for up to a determined bandwidth (e.g. 80MHz). In another aspect, the punctured channel information is able to indicate all channel puncturing patterns that are allowed for up to a determined bandwidth (e.g. 80MHz) and a part of channel puncturing patterns for bandwidths which are larger than the determined bandwidth. This may allow preamble puncturing for a PPDU transmitted to a single communication apparatus or multiple communication apparatuses and may advantageously enable efficient signaling support and improve spectral efficiency of 11be EHT WLAN over 11ax HE WLAN.

In the following paragraphs, certain exemplifying aspects are explained with reference to an AP and multiple STAs for control signaling to enable preamble puncturing for a PPDU transmitted to a single communication apparatus or multiple communication apparatuses in non-trigger-based communications.

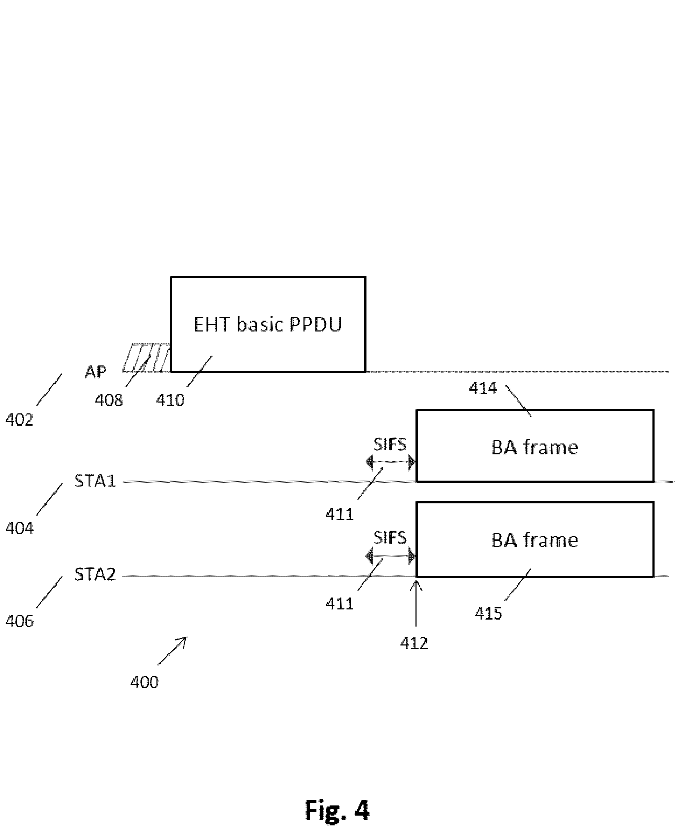

Fig. 4 depicts a flow chart 400 illustrating a downlink communication according to the present disclosure, where the downlink communication is between an AP 402 and a single STA 404 or between an AP 402 and multiple communication apparatuses like STAs 404, 406. Contention based channel access procedures, e.g. enhanced distributed channel access (EDCA) procedures, is illustrated by block 408, and short interframe spacing (SIFS) 411 is illustrated. The AP 402 may generate a transmission signal (for example an EHT basic PPDU) 410 comprising a first signal field and a second signal field, wherein the first signal field comprises punctured channel information and the second signal field comprises supplemental punctured channel information, wherein when the transmission signal is used for punctured SU or MU-MIMO transmission and the punctured channel information is able to indicate a channel puncturing pattern that is applied to the transmission signal, the second signal field does not comprise the supplemental punctured channel information. The ratio transmitter of AP 402 may transmit the generated transmission signal 410 to STA 404 or STAs 404, 406.

In IEEE 802.11 networks, a SIFS is the time spacing prior to transmission of an acknowledgement by a STA. After the last symbol of the transmission signal 410 is transmitted, a SIFS 411 may take effect, and at 412, the radio transmitters of STAs 404, 406 may simultaneously transmit their respective block acknowledgement (BA) frames 414, 415 when the transmission signal 410 is transmitted to STAs 404, 406; or the radio transmitter of STA 404 may transmit its own BA frame 414 when the transmission signal 410 is transmitted to STA 404.

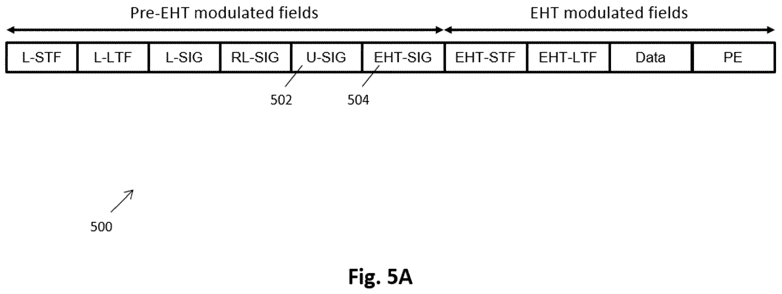

According to the present disclosure, an EHT basic PPDU can be used for non-trigger-based SU or MU communications. Fig. 5A depicts an example format of an EHT basic PPDU 500. The EHT basic PDDU 500 comprises a L-STF, L-LTF, L-SIG field, RL-SIG field, a universal signal (U-SIG) field 502, an EHT signal (EHT-SIG) field 504, an EHT-STF, an EHT-LTF, a Data field and a PE field. The L-STF, the L-LTF, the L-SIG field, the RL-SIG field, the U-SIG field and the EHT-SIG field may be grouped as pre-EHT modulated fields, while the EHT-STF, the EHT-LTF, the Data field and the PE field may be grouped as EHT modulated fields. Both U-SIG field 502 and EHT-SIG field 504 are present in the EHT basic PPDU transmitted to a single STA or multiple STAs.

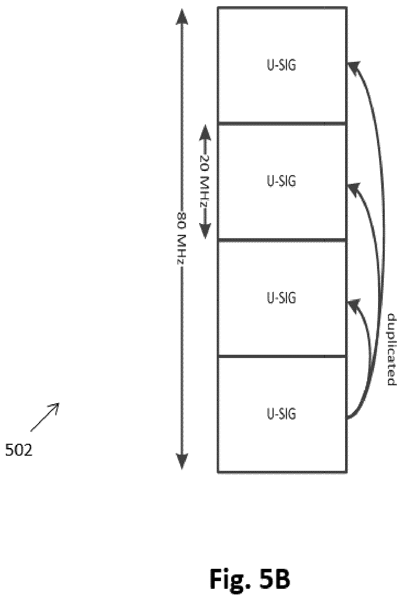

According to various aspects, U-SIG field 502 has a duration of two orthogonal frequency-division multiplexing (OFDM) symbols. Data bits in the U-SIG field 502 are jointly encoded and modulated in the same manner as the HE-SIG-A field of 802.11ax. Modulated data bits in the U-SIG field 502 are mapped to 52 data tones of each of the two OFDM symbols and duplicated for each 20MHz frequency segment in the same manner as the HE-SIG-A field of 802.11ax. An example of transmission of U-SIG field 502, where the bandwidth of EHT basic PPDU 500 is 80MHz, is illustrated in Fig. 5B. According to various aspects, the term "frequency segment" may be used interchangeably with the term "subchannel".

In various aspects, U-SIG field 502 has a same format regardless of whether EHT basic PPDU 500 is transmitted to a single STA or multiple STAs. U-SIG field 502 comprises two parts: U-SIG1 and U-SIG2, each comprising 26 data bits. U-SIG field 502 comprises all version independent bits and a part of version dependent bits. All version independent bits are included in U-SIG1 and have static location and bit definition across different physical layer (PHY) versions, the version independent bits comprising PHY version identifier (3 bits), uplink/downlink (UL/DL) flag (1 bit), basic service set (BSS) color (e.g. 6 bits), transmission opportunity (TXOP) duration (e.g. 7 bits), and bandwidth (e.g. 3 or 4 bits). The PHY version identifier of the version independent bits is used to identify the exact PHY version starting with 802.11be. The effect of including all version independent bits into one part of U-SIG field 502, i.e. U-SIG1, is that the legacy STAs only require to parse U-SIG1 and thus their power efficiency can be improved. On the other hand, version dependent bits may have variable bit definition in each PHY version. The part of version dependent bits included in U-SIG field 502 may comprise PPDU type as well as EHT-SIG related bits which are used for interpreting EHT-SIG field 504, and spatial reuse related bits which are used for coexisting with unintended STAs.

**Table 1: An example format of U-SIG field of EHT basic PPDU**

| | **Field name** | **Field size (bits)** |
|---|---|---|
| U-SIG1 | PHY Version Identifier | 3 |
| | UL/DL Flag | 1 |
| | BSS Color | 6 |
| | TXOP Duration | 7 |
| | BW | 4 |
| | Reserved | 3 |
| | PPDU type | 2 |
| U-SIG2 | EHT-SIG Compression | 1 |
| | EHT-SIG DCM | 1 |
| | EHT-SIG EHT MCS | 3 |
| | Number Of EHT-SIG Symbols Or non-OFDMA Users | 5 |
| | Spatial Reuse | 4 |
| | Reserved | 2 |
| | CRC | 4 |
| | Tail | 6 |
| | Total | 52 |

Table 1 illustrates an example format of U-SIG field 502. As mentioned above, the U-SIG field 502 comprises two parts: U-SIG1 and U-SIG2, each of the two parts containing 26 data bits. U-SIG1 comprises a PHY Version Identifier field, an UL/DL Flag field, a BSS Color field, a TXOP Duration field, a BW (bandwidth) field, and a PPDU Type field; whereas U-SIG2 comprises an EHT-SIG Compression field, an EHT-SIG Dual sub-Carrier Modulation (DCM) field, an EHT-SIG EHT MCS field, a Number Of EHT-SIG Symbols Or Non-OFDMA Users field, and a Spatial Reuse field, followed by reserved bits, a Cyclic Redundancy Check (CRC) field for detecting error and tail bits. In an aspect, when the PHY Version Identifier field refers to 802.11be, the PPDU Type field may be set to "0" for EHT basic PPDU and "1" for EHT TB PPDU. Unless specified otherwise in this specification, it should be appreciable and apparent to one of ordinary skilled in the art that the standard definitions, protocols and functions of most of the fields in U-SIG field 502 listed in table 1 can be obtained from the 802.11ax specification.

Returning to Fig. 5A, EHT-SIG field 504 of EHT basic PPDU 500 may include remaining version dependent bits. It has a variable MCS and variable length. EHT-SIG field 504 has a Common field followed by a User Specific field which together are referred to as an EHT-SIG content channel. The User Specific field comprises one or more user field. The Common field comprises a first part and may comprise a second part. The first part comprises common information to all scheduled STA(s) except RU allocation information, whereas the second part may comprise the RU allocation information. The first part contains a determined number of data bits and may be the same across all EHT-SIG content channels; whereas the second part may be different among the EHT-SIG content channels.

Unlike U-SIG field 502, the format of EHT-SIG field 504 depends on whether EHT basic PPDU 500 is transmitted to a single STA or multiple STAs. In an event of EHT basic PPDU 500 transmitted to a single STA, there will be a single EHT-SIG content channel regardless of the BW of EHT basic PPDU 500, which is duplicated for each 20MHz frequency segment. In an event of EHT basic PPDU 500 transmitted to multiple STAs, there is one or two EHT-SIG content channels depending on the BW of EHT basic PPDU 500. Specifically, e EHT-SIG field 504 comprising the Common field and the User Specific field are separately encoded on each L × 20MHz frequency segment, where L = 1 or 2.

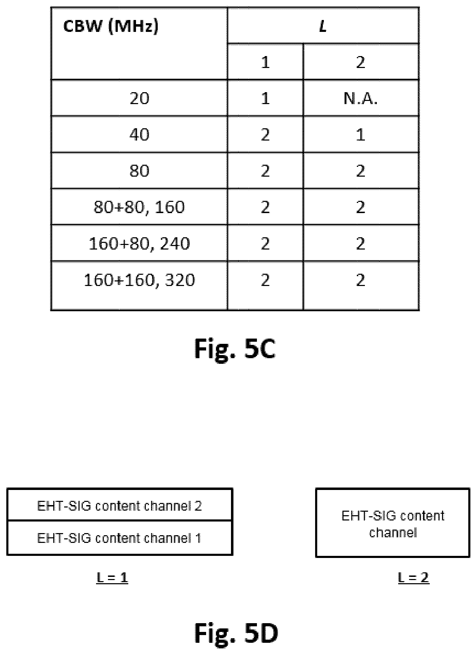

Fig. 5C shows a table of how the number of EHT-SIG content channels depends on the bandwidth and the value of L when EHT basic PPDU 500 is transmitted to multiple STAs. As shown in Fig. 5C, in an aspect where the BW of EHT basic PPDU 500 is 20MHz, L can only be 1 because EHT-SIG field 504 is encoded on a per-20MHz basis and there will be only one EHT-SIG content channel. In an aspect where the BW of EHT basic PPDU 500 is 40MHz, L may be assigned by the AP the value of 1 or 2. If L is set to "1", there will be two EHT-SIG content channels. If L is set to "2", there will be only one EHT-SIG content channel. In an aspect where the BW of EHT basic PPDU 500 is 80MHz, 80+80MHz, 160MHz, 160+80MHz, 240MHz, 160+160MHz or 320MHz, there will be two EHT-SIG content channels regardless of the value of L. More details will be provided below.

Fig. 5D shows a diagram of mapping of the one or two EHT-SIG content channels in a 40MHz EHT basic PPDU. The number of EHT-SIG content channels depends on the bandwidth and the value of L as shown in Fig. 5C. A 40 MHz channel comprises two 20MHz frequency segments. When L = 1, there will be two EHT-SIG content channels (namely, EHT-SIG content channel 1 and EHT-SIG content channel 2) which are transmitted in the 1^{st} and 2^{nd} 20MHz frequency segments, respectively. When L = 2, there will be only one EHT-SIG content channel.

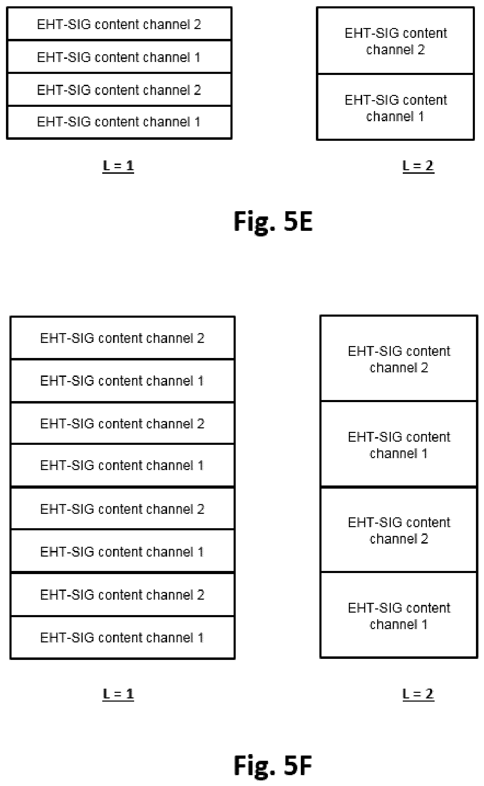

Fig. 5E shows a diagram of mapping of the two EHT-SIG content channels (namely EHT-SIG content channel 1 and EHT-SIG content channel 2) in an 80MHz EHT basic PPDU. When L = 1, in an 80MHz channel comprising four 20MHz frequency segments, EHT-SIG content channel 1 is duplicated and transmitted in the 1^{st} and 3^{rd} 20MHz frequency segments while EHT-SIG content channel 2 is duplicated and transmitted in the 2^{nd} and 4^{th} 20MHz frequency segments. When L = 2, in an 80MHz channel comprising two 40MHz frequency segments, EHT-SIG content channel 1 is transmitted in the 1^{st} 40MHz frequency segment while EHT-SIG content channel 2 is transmitted in the 2^{nd} 40MHz frequency segment.

Fig. 5F shows a diagram of mapping of the two EHT-SIG content channels in an 80+80MHz or 160MHz EHT basic PPDU. When L = 1, in an 80+80MHz or 160MHz channel comprising eight 20MHz frequency segments, EHT-SIG content channel 1 is duplicated and transmitted in the 1^{st}, 3^{rd}, 5^{th} and 7^{th} 20MHz frequency segments while EHT-SIG content channel 2 is duplicated and transmitted in the 2^{nd}, 4^{th}, 6^{th} and 8^{th} 20MHz frequency segments. When L = 2, in an 80+80MHz or 160MHz channel comprising four 40MHz frequency segments, EHT-SIG content channel 1 is duplicated and transmitted in the 1^{st} and 3^{rd} 40MHz frequency segments while EHT-SIG content channel 2 is duplicated and transmitted in the 2^{nd} and 4^{th} 40MHz frequency segments.

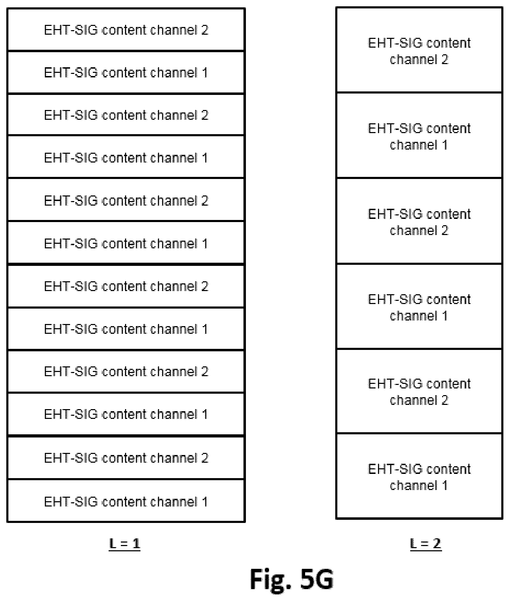

Fig. 5G shows a diagram of mapping of the two EHT-SIG content channels in a 160+80MHz or 240MHz EHT basic PPDU. When L = 1, in a 160+80MHz or 240MHz channel comprising twelve 20MHz frequency segments, EHT-SIG content channel 1 is duplicated and transmitted in the 1^{st}, 3^{rd}, 5^{th}, 7^{th} 9^{th} and 11^{th} 20MHz frequency segments while EHT-SIG content channel 2 is duplicated and transmitted in the 2^{nd}, 4^{th}, 6^{th} 8^{th}, 10^{th} and 12^{th} 20MHz frequency segments. When L = 2, in a 160+80MHz or 240MHz channel comprising six 40MHz frequency segments, EHT-SIG content channel 1 is duplicated and transmitted in the 1^{st}, 3^{rd} and 5^{th} 40MHz frequency segments while EHT-SIG content channel 2 is duplicated and transmitted in the 2^{nd}, 4^{th} and 6^{th} 40MHz frequency segments.

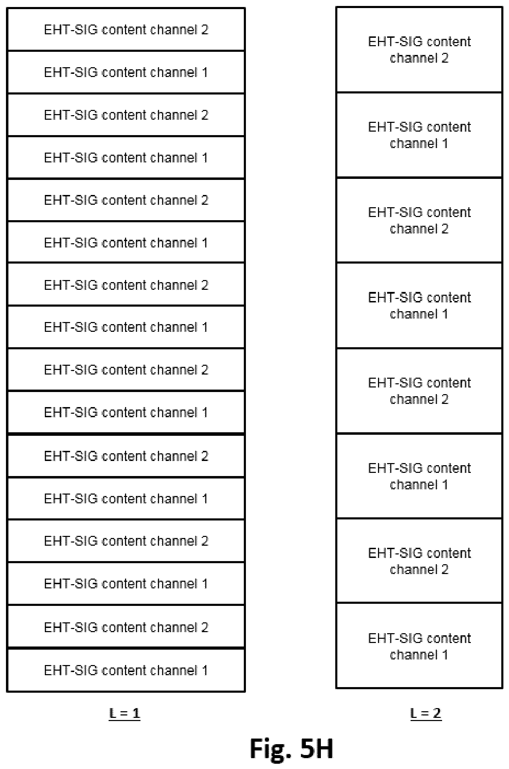

Fig. 5H shows a diagram of mapping of the two EHT-SIG content channels in a 160+160MHz or 320MHz EHT basic PPDU. When L = 1, in a 160+160MHz or 320MHz channel comprising sixteen 20MHz frequency segments, EHT-SIG content channel 1 is duplicated and transmitted in the 1^{st}, 3^{rd}, 5^{th} 7^{th} g^{th}, 11^{th}, 13^{th} and 15^{th} 20MHz frequency segments while EHT-SIG content channel 2 is duplicated and transmitted in the 2^{nd}, 4^{th}, 6^{th} 8^{th}, 10^{th}, 12^{th}, 14^{th} and 16^{th} 20MHz frequency segments. When L = 2, in a 160+160MHz or 320MHz channel comprising eight 40MHz frequency segments, EHT-SIG content channel 1 is duplicated and transmitted in the 1^{st}, 3^{rd}, 5^{th} and 7^{th} 40MHz frequency segments while EHT-SIG content channel 2 is duplicated and transmitted in the 2^{nd} 4^{th}, 6^{th} and 8^{th} 40MHz frequency segments.

According to various aspects of the present disclosure, U-SIG field 502 comprises punctured channel information. There are two options for punctured channel information to be carried in U-SIG field 502: (i) punctured channel information is carried in a Punctured Channel Info field; or (ii) punctured channel information, together with bandwidth information, is carried in a BW field. For example, under option 2, i.e. punctured channel information and BW information are carried in a BW field in U-SIG field 502, the BW field of U-SIG field 502 is set to "0" for 20MHz, "1" for 40MHz, "2" for 80MHz non-preamble puncturing mode, "3" for 160MHz and 80+80MHz non-preamble puncturing mode, "4" for 240MHz and 160+80MHz non-preamble puncturing mode, "5" for 320MHz and 160+160MHz non-preamble puncturing mode, "6" for 80MHz preamble puncturing mode, "7" for 160MHz and 80+80MHz preamble puncturing mode, "8" for 240MHz and 160+80MHz preamble puncturing mode, and "9" for 320MHz and 160+160MHz preamble puncturing mode. It is noted that a preamble puncturing mode is only allowed when a PPDU has a BW of 80MHz or higher.

According to a first aspect of the present disclosure, the Common field of EHT-SIG field 504 may comprise supplemental punctured channel information, depending on the mode of transmission of EHT basic PPDU 500. In case of EHT basic PPDU 500 used for full bandwidth SU or MU-MIMO transmission, EHT-SIG field 504 does not comprise supplemental punctured channel information and RU allocation information. In case of EHT basic PPDU 500 used for punctured SU or MU-MIMO transmission, EHT-SIG field 504 comprises supplemental punctured channel information but does not comprise RU allocation information, and the punctured channel information in U-SIG field 502 and supplemental punctured channel information in EHT-SIG field 504 jointly indicate a channel puncturing pattern that is applied to EHT basic PPDU 500. In case of EHT basic PPDU 500 used for OFDMA transmission, EHT-SIG field 504 does not comprise supplemental punctured channel information but comprise RU allocation information. The punctured channel information in U-SIG field 502 and RU allocation information in EHT-SIG field 504 jointly indicate a channel puncturing pattern that is applied to EHT basic PPDU 500. Specifically, RU allocation information in EHT-SIG field 504 may indicate one or more 20MHz subchannel is not allocated. The one or more 20MHz subchannel which is not allocated has the same effect as the one or more 20MHz subchannel which is punctured.

With such EHT basic PPDU configuration with U-SIG field 502 comprising punctured channel information and EHT-SIG field 504 comprising supplemental punctured channel information, as much punctured channel information as possible can advantageously be obtained at the earliest time.

According to the first aspect of the present disclosure, different EHT-SIG compression modes may be enabled depending on the necessary information contained in EHT-SIG field 504 of EHT basic PPDU 500. There may be three different EHT-SIG compression modes: (i) compression mode 0 used for OFDMA transmission, where the Common field of EHT-SIG field 504 comprises RU allocation information but does not comprise supplemental punctured channel information; (ii) compression mode 1 used for full bandwidth SU or MU-MIMO where the Common field of EHT-SIG field 504 does not comprise RU allocation information and supplemental punctured channel information; and (iii) compression mode 2 used for punctured SU or MU-MIMO transmission, where the Common field of EHT-SIG field 504 does not comprise RU allocation information but comprise supplemental punctured channel information. In various aspects below, EHT-SIG compression mode 0 refers to no compression on EHT-SIG field 504.

In an aspect, EHT-SIG compression mode may be indicated in EHT-SIG Compression field and BW field of U-SIG field 502. Table 2 depicts how various EHT-SIG compression modes are indicated in EHT-SIG Compression field and BW field of U-SIG field 502. For EHT-SIG compression mode 0 used for OFDMA transmission, the EHT-SIG Compression field value is "0", regardless of the BW of EHT basic PPDU 500. The Common field of EHT-SIG field 504 comprises RU allocation information but does not comprise supplemental punctured channel information. For EHT-SIG compression mode 1 used for full bandwidth SU or MU-MIMO transmission, the EHT-SIG Compression field value is "1" and the BW field value is one of "0" to "5" (i.e. non-preamble puncturing mode). The Common field of EHT-SIG field 504 does not comprise RU allocation information and supplemental punctured channel information. For EHT-SIG compression mode 2 used for punctured SU or MU-MIMO transmission, the EHT-SIG Compression field value is "1" and the BW field value is one of "5" to "9" (i.e. preamble puncturing mode). The Common field of EHT-SIG field 504 does not comprise RU allocation information but comprise supplemental punctured channel information.

**Table 2 Various EHT-SIG compression modes in relation to EHT-SIG Compression field value and BW field value of U-SIG field 502.**

| **EHT-SIG Compression field value** | **BW field value** | **Meaning** |
|---|---|---|
| 0 | Any | EHT-SIG compression mode 0 |
| 1 | 0 to 5 | EHT-SIG compression mode 1 |
| 1 | 6 to 9 | EHT-SIG compression mode 2 |

Further, SU or MU-MIMO transmission is indicated through the Number Of EHT-SIG Symbols Or Non-OFDMA Users field of U-SIG field 502 when EHT-SIG Compression field is set to 1. Specifically, a value of "0" in the Number Of EHT-SIG Symbols Or Non-OFDMA Users field indicates a SU transmission.

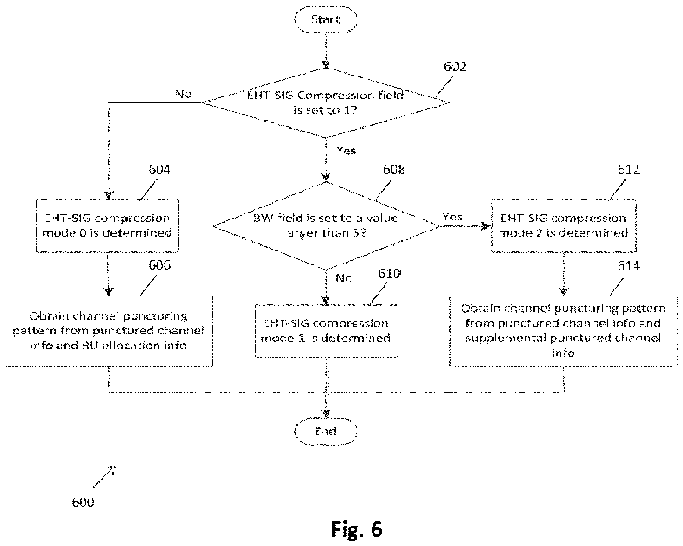

Fig. 6 depicts a flow diagram 600 illustrating processing of a received EHT basic PPDU 500 in an AP or a STA according to the first aspect. The process may start through determining if the EHT-SIG Compression field of U-SIG field 502 of received EHT basic PPDU 500 is set to "1". If it is set to "1", step 608 is carried out; otherwise step 604 is carried out. In step 604, EHT-SIG compression mode 0 is determined, and then in step 606, a channel puncturing pattern that is applied to the received EHT basic PPDU 500 may be obtained from punctured channel information and RU allocation information which are respectively obtained from U-SIG field 502 and EHT-SIG field 504. Returning to step 608, the process may continue through determining if BW field is set to a value of large than "5". If the BW field is not set to a value larger than "5", EHT-SIG compression mode 1 is determined in step 610, indicating a full bandwidth SU or MU-MIMO transmission; otherwise, step 612 is carried out. In step 612, EHT-SIG compression mode 2 is determined, indicating a punctured SU or MU-MIMO transmission, and then in step 614, a channel puncturing pattern that is applied to the received EHT basic PPDU 500 is obtained from punctured channel information and supplemental punctured channel information which are respectively obtained from U-SIG field 502 and EHT-SIG field 504.

**Table 3: An example format of the first part of Common field of EHT-SIG field**

| **Field name** | **Field size (bits)** |
|---|---|
| LDPC Extra Symbol Segment | 1 |
| Pre-FEC Padding Factor | 2 |
| PE Disambiguity | 1 |
| Doppler | 1 |
| GI-LTF Size | 2 |
| EHT-LTF mode | 1 |
| Number Of EHT-LTF Symbols And Midamble Periodicity | 4 |
| Total | 12 |

Returning to EHT-SIG field 504, example format of the first part of Common field of EHT-SIG field 504 is illustrated in table 3. As indicated above, the first part of Common field comprises common information to all scheduled STA(s) except RU allocation information and contains a determined number of data bits which may be the same across all EHT-SIG content channels. Specifically, the first part of Common field may comprise a Low Density Parity Code (LDPC) Extra Symbol Segment subfield, a Pre-FEC Padding Factor subfield, a PE Disambiguity subfield, a Doppler subfield, a GI-LTF Size subfield, an EHT-LTF Mode subfield and a Number Of EHT-LTF Symbols And Midamble Periodicity subfield.

Example formats of the second part of Common field of EHT-SIG field 504 are illustrated in tables 9 and 10. The second part of Common field of EHT-SIG field 504 may comprise RU allocation information and/or supplemental punctured channel information and may be different among the EHT-SIG content channels. Similar to punctured channel information and bandwidth information which can be contained in a single field or two separate fields in U-SIG field 502, RU allocation information and supplemental punctured channel information can be contained in a single field of the second part of the Common field (e.g. RU Allocation Or Supplemental Punctured Channel Info field), where its field size depends on BW and compression mode, as illustrated in table 9. Alternatively, RU allocation information and supplemental punctured channel information can be contained in two separate fields of the second part of the Common field (e.g. RU Allocation Info field and Supplemental Punctured Channel Info field, respectively), where field size of each RU Allocation Info field and Supplemental Punctured Channel Info field depends on BW, as illustrated in table 10. Specifically, the second part of Common field of EHT-SIG field 504 may comprise a bitmap, for example 3 bits for the BW of 80MHz, 7 bits for the BW of 160MHz or 80+80MHz, 11 bits for the BW of 240MHz or 160+80MHz and 15 bits for the BW of 320MHz or 160+160MHz, to carry the supplemental punctured channel information. The bitmap indicates whether each 20MHz subchannel which is not primary 20MHz is punctured. It is noted that a preamble puncturing mode is only allowed when an EHT basic PPDU has a BW of 80MHz or higher. It is also noted that under EHT-SIG compression mode 1, EHT-SIG field 504 does not comprise both RU allocation information and supplemental punctured channel information.

Example format of User field of EHT-SIG field 504 for non-MU MIMO allocation and MU-MIMO allocation are illustrated in tables 4 and 5 respectively. For non-MU MIMO allocation, a User field may comprise a STA ID field, an EHT MCS field, a DCM field, a NSTS field, a Coding field and a Beamformed field; whereas for MU-MIMO allocation, a User field may comprise a STA ID field, an EHT MCS field, a Spatial Configuration field and a Coding field. It should be appreciable and apparent to one of ordinary skilled in the art that the standard definitions, protocols and functions of all fields of Common field and User field listed in tables 3 to 5, 9 and 10 can be obtained from the 802.11ax specification, unless specified otherwise in this specification.

**Table 4: An example format of User field of EHT-SIG field 504 for non-MU-MIMO allocation**

| **Field name** | **Field size (bits)** |
|---|---|
| STA ID | 11 |
| EHT MCS | 4 |
| DCM | 1 |
| NSTS | 4 |
| Coding | 1 |
| Beamformed | 1 |
| Total | 22 |

**Table 5: An example format of User field of EHT-SIG field 504 for MU-MIMO allocation**

| **Field name** | **Field size (bits)** |
|---|---|
| STA ID | 11 |
| EHT MCS | 4 |
| Spatial Configuration | 6 |
| Coding | 1 |
| Total | 22 |

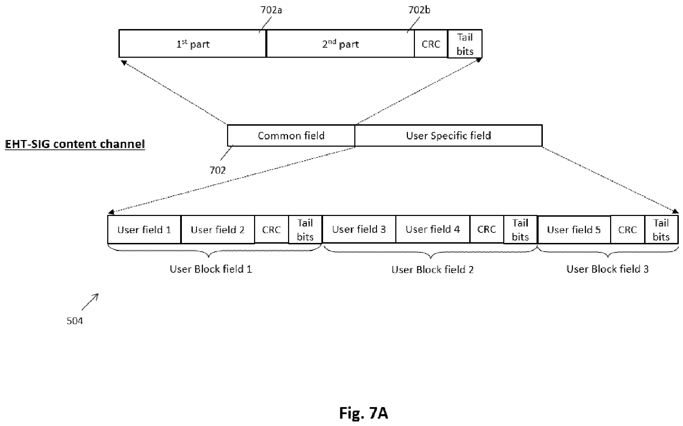

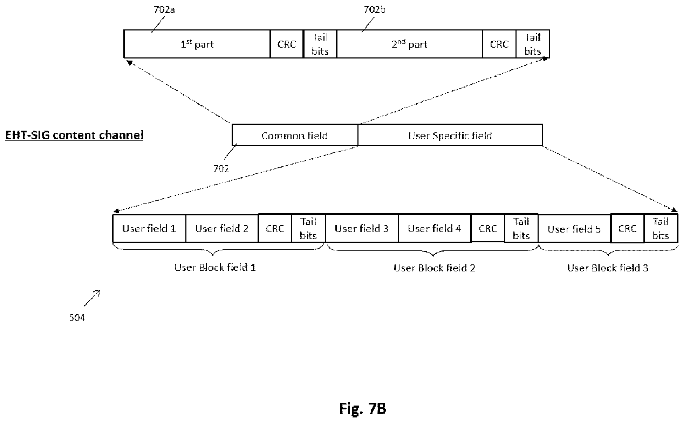

A User Specific field may consist one or more User Block field(s), and each User Block field comprises one or two User fields. For example, as illustrated in Figs. 7A and 7B, a User Specific field may contain 3 User Block fields 1, 2 and 3, the User Block field 1 comprising two user fields like User field 1 and User field 2, User Block field 2 comprising two user fields like User field 3 and User field 4, and User Block field 3 comprising one User field 5, where the one or two user fields in each User Block fields 1 to 3 is appended with a CRC field for detecting error and tail bits. In an aspect, the last User Block may consist of one or two user fields depending on the total number of user fields that are allowed in the User Specific field referring to an odd or even number.

According to the present disclosure, the first part and the second part of Common field of EHT-SIG field 504 or EHT-SIG content channel can be jointly encoded or separately encoded, resulting in different EHT-SIG field format options. Fig. 7A depicts an example format of an EHT-SIG content channel of EHT-SIG field 504 where the first part 702a and the second part 702b of the Common field 702 are jointly encoded (Option 1). In this option, the first part 702a of the Common field 702 is followed by the second part 702b of the Common field 702 to which a single block of CRC field and tail bits are appended. Such EHT-SIG field format with jointly encoded Common field may advantageously reduce the number of CRC fields and tail bits used in EHT-SIG field, thus reduce signaling overhead.

Fig. 7B depicts another example format of an EHT-SIG content channel or EHT-SIG field 504 where the first part 702a and the second part 702b of the Common field 706 are separately encoded (Option 2). In this option, a CRC field and tail bits may be included at the end of each separately encoded field, i.e. the first part 702a and the second part 702b of the Common field 702. In an aspect, when EHT-SIG compression mode 1 is enabled, for example the EHT-SIG Compression field of U-SIG field 502 is set to "1" and the BW field of U-SIG field 502 is set to one of "0" to "5" indicating a full bandwidth SU or MU-MIMO transmission, the second part of the Common field 702b comprising RU allocation information and supplemental punctured channel information may not be present. In this case, both format option 1 and option 2 of EHT-SIG field 504 or EHT-SIG content channel are identical.

Yet in another aspect, the first part 702a and the second part 702b of the Common field of an EHT-SIG content channel or EHT-SIG field 504 may be separately encoded or jointly encoded depending on which compression mode is enabled. When EHT-SIG compression mode 0 is enabled, the first part 702a and the second part 702b of Common field of EHT-SIG field 504 are separately encoded; whereas when EHT-SIG compression mode 2 is enabled, the first part 702a and the second part 702b of Common field are jointly encoded to reduce EHT-SIG field signaling overhead.

According to a second aspect of the present disclosure, when an **EHT** basic PPDU 500 is used for punctured SU or MU-MIMO transmission, if the punctured channel information in U-SIG field 502 is able to indicate a channel puncturing pattern that is applied to EHT basic PPDU 500, supplemental punctured channel information is not required therefore EHT-SIG field 504 may not comprise supplemental punctured channel information. On the other hand, if the punctured channel information in U-SIG field 502 is not able to indicate a channel puncturing pattern that is applied to EHT basic PPDU 500, EHT-SIG field 504 comprises supplemental punctured channel information that, together with the punctured channel information in U-SIG field 502, indicates a channel puncturing pattern that is applied to EHT basic PPDU 500.

In one aspect, the punctured channel information in U-SIG field 502 may be able to indicate all channel puncturing patterns that are allowed for up to a determined BW (e.g. 80MHz). When an EHT basic PPDU 500 is used for punctured SU or MU-MIMO transmission, if the BW of EHT basic PPDU 500 is less than or equal to the determined BW, supplemental punctured channel information is not required therefore EHT-SIG field 504 may not comprise supplemental punctured channel information.

In another aspect, the punctured channel information in U-SIG field 502 may be able to indicate all channel puncturing patterns that are allowed for up to a determined BW (e.g. 80MHz) and a part of channel puncturing patterns for BWs larger than the determined BW. When an EHT basic PPDU 500 is used for punctured SU or MU-MIMO transmission, if the BW of EHT basic PPDU 500 is less than or equal to the determined BW, supplemental punctured channel information is not required therefore EHT-SIG field 504 may not comprise supplemental punctured channel information. If the BW of EHT basic PPDU 500 is larger than the determined BW, and the part of channel puncturing patterns for BWs larger than the determined BW, which the punctured channel information in U-SIG field 502 is able to indicate, includes a channel puncturing pattern that is applied to EHT basic PPDU 500, supplemental punctured channel information is not required therefore EHT-SIG field 504 may not comprise supplemental punctured channel information.

In yet another aspect, the punctured channel information in U-SIG field 502 may be able to indicate a plurality of channel puncturing patterns that are allowed for different BWs. When an EHT basic PPDU 500 is used for punctured SU or MU-MIMO transmission, if the plurality of channel puncturing patterns for different BWs, which the punctured channel information in U-SIG field 502 is able to indicate, includes a channel puncturing pattern that is applied to EHT basic PPDU 500, supplemental punctured channel information is not required therefore EHT-SIG field 504 may not comprise supplemental punctured channel information.

The effect of such implementation allows compression mode 1 to be enabled in more use cases and thus EHT-SIG field signaling overhead can be minimized. Specifically, according to the second aspect, there may be three different EHT-SIG compression modes for EHT-SIG field 504 of EHT basic PPDU 500: (i) compression mode 0 (i.e. no compression) where the Common field 702b of EHT-SIG field 504 comprises RU allocation information used for OFDMA transmission but does not comprise supplemental punctured channel information; (ii) compression mode 1 used for SU or MU-MIMO transmission where the Common field 702b of EHT-SIG field 504 does not comprise RU allocation information and supplemental punctured channel information; and (iii) compression mode 2 used for SU or MU-MIMO transmission where the Common field 702b of EHT-SIG field 504 does not comprise RU allocation information but comprises supplemental punctured channel information.

In particular, EHT-SIG compression mode 1 is enabled for an EHT basic PPDU 500 used for SU or MU-MIMO transmission where supplemental punctured channel information in EHT-SIG field 504 is not required. Example use cases include an EHT basic PPDU 500 used for full bandwidth SU or MU-MIMO transmission (use case 1); or used for punctured SU or MU-MIMO transmission when the punctured channel information in U-SIG field 502 is able to indicate a channel puncturing pattern that is applied to EHT basic PPDU 500 (use case 2). Under EHT-SIG compression mode 1, the Common field 702b of EHT-SIG field 504 does not comprise both RU allocation information and supplemental punctured channel information.

EHT-SIG compression mode 2 is enabled for an EHT basic PPDU 500 used for SU or MU-MIMO transmission where supplemental punctured channel information is required in EHT-SIG 504. Example use case is an EHT basic PPDU 500 used for SU or MU-MIMO transmission where the punctured channel information in U-SIG field 502 is not able to indicate a channel puncturing pattern that is applied to EHT basic PPDU 500. Under EHT-SIG compression mode 2, the Common field 702b of EHT-SIG field 504 does not comprise RU allocation information but comprises supplemental punctured channel information.

According to the second aspect, the 2^{nd} use case of EHT-SIG compression mode 1 and the use case of EHT-SIG compression mode 2 depend on the content of punctured channel information in U-SIG field 502. For example, assume that the punctured channel information in U-SIG field 502 is able to indicate whether each 20MHz subchannel within primary 80MHz which is not primary 20MHz is punctured and whether at least one 20MHz subchannel outside primary 80MHz is punctured. Under this assumption, the 2^{nd} use case of EHT-SIG compression mode 1 can be further divided into two use cases: an EHT basic PPDU 500 used for punctured SU or MU-MIMO transmission when the BW of EHT basic PPDU 500 is 80MHz (use case 2.1); and an EHT basic PPDU 500 used for punctured SU or MU-MIMO transmission when the BW of EHT basic PPDU 500 is larger than 80MHz and no 20MHz subchannel outside primary 80MHz is punctured (use case 2.2). On the other hand, the use case of EHT-SIG compression mode 2 is an EHT basic PPDU 500 used for punctured SU or MU-MIMO transmission when the BW of EHT basic PPDU 500 is larger than 80MHz and at least one 20MHz subchannel outside primary 80MHz is punctured.

**Table 6: A second example format of U-SIG field of EHT basic PPDU**

| | **Field name** | **Field size (bits)** |
|---|---|---|
| U-SIG1 | PHY Version Identifier | 3 |
| | UL/DL Flag | 1 |
| | BSS Color | 6 |
| | TXOP Duration | 7 |
| | BW | 3 |
| | Reserved | 2 |
| | PPDU type | 2 |
| | EHT-SIG Compression | 1 |
| | EHT-SIG DCM | 1 |
| U-SIG2 | EHT-SIG EHT MCS | 3 |
| | Number Of EHT-SIG Symbols Or non-OFDMA Users | 5 |
| | Spatial Reuse | 4 |
| | Punctured Channel Info | 4 |
| | CRC | 4 |
| | Tail | 6 |
| | Total | 52 |

Table 6 depicts an example format of U-SIG field 502 in EHT basic PPDU 500. The U-SIG field 502 comprises two parts: U-SIG1 and U-SIG2, each of the two parts containing 26 data bits. The U-SIG1 comprises all version independent bits such as a PHY Version Identifier field, an UL/DL Flag field, a BSS Color field, a TXOP Duration field and a BW field, a part of version dependent bits such as a PPDU Type field and some of EHT-SIG related bits, such as an EHT-SIG Compression field and an EHT-SIG DCM field. The U-SIG2 comprises the remaining version dependent bits such as an EHT-SIG EHT MCS field, a Number Of EHT-SIG Symbols Or Non-OFDMA Users field, a Spatial Reuse field, and a Punctured Channel Info field followed by reserved bits, a CRC field and tail bits. Unless specified otherwise in this specification, it should be appreciable and apparent to one of ordinary skilled in the art that the standard definitions, protocols and functions of most of the fields in the U-SIG field 502 listed in table 6 can be obtained from the 802.11ax specification.

Specifically, the Punctured Channel Info field is a 4-bit bitmap, of which three least significant bits (LSBs) indicates whether each 20MHz subchannel within primary 80MHz which is not primary 20MHz is punctured and a most significant bit (MSB) indicates whether at least one 20MHz subchannel outside primary 80MHz is punctured, which is reserved for the BW of 80MHz. The BW field of U-SIG field 502 is set to "0" for 20MHz, "1" for 40MHz, "2" for 80MHz, "3" for 160MHz and 80+80MHz, "4" for 240MHz and 160+80MHz, "5" for 320MHz and 160+160MHz.

In an aspect, EHT-SIG compression mode may be indicated in EHT-SIG Compression field, Punctured Channel Info field and BW field of U-SIG field 502. Table 11 depicts how various EHT-SIG compression modes are indicated in EHT-SIG Compression field, Punctured Channel Info field and BW field of U-SIG field 502. In particular, when the EHT-SIG Compression field value is "0" indicating an OFDMA transmission, EHT-SIG compression mode 0 is enabled regardless of the Punctured Channel Info field value and the BW field value.

Table 11 is plotted based on an assumption that the punctured channel information in U-SIG field 502 is able to indicate whether each 20MHz subchannel within primary 80MHz which is not primary 20MHz is punctured and whether at least one 20MHz subchannel outside primary 80MHz is punctured. When the EHT-SIG Compression field value is "1", Punctured Channel Information field has all non-reserved bits set to "0" indicating a non-preamble puncturing mode, EHT-SIG compression mode 1 can be enabled under use case 1 regardless of the BW field value. When the EHT-SIG Compression field value is "1", at least one of 3 LSBs of Punctured Channel Info field is set to "1", and BW field value is "2" (BW = 80MHz), at least one 20MHz subchannel within 80MHz channel which is not primary 20MHz is punctured. In this case, a channel puncturing pattern that is applied to an EHT basic PPDU 500 used for punctured SU or MU-MIMO transmission can be determined solely based on punctured channel information in U-SIG field 502, and thus EHT-SIG compression mode 1 can be enabled for EHT basic PPDU 500 under use case 2.1. When the EHT-SIG Compression field value is "1", at least one of 3 LSBs of Punctured Channel Info field is set to "1" and MSB of Punctured Channel Info field is set to "0", and BW field value is larger than "2" (BW > 80MHz), at least one 20MHz subchannel within primary 80MHz which is not primary 20MHz is punctured and no 20MHz subchannel outside primary 80MHz is punctured. In this case, a channel puncturing pattern that is applied to an EHT basic PPDU 500 used for punctured SU or MU-MIMO transmission can also be determined solely based on punctured channel information in U-SIG field 502, and thus EHT-SIG compression mode 1 can be enabled for EHT basic PPDU 500 under use case 2.2.

When the EHT-SIG Compression field value is "1", MSB of Punctured Channel Info field is set to "1" and BW field value is larger than "2" (BW > 80MHz), at least one 20MHz subchannel outside primary 80 MHz is punctured. In this case, a channel puncturing pattern that is applied to an EHT basic PPDU 500 used for punctured SU or MU-MIMO transmission can be determined based on punctured channel information in U-SIG field 502 and supplemental punctured channel information in EHT-SIG field 504, and thus EHT-SIG compression mode 2 can be enabled for EHT basic PPDU 500.

Further, SU or MU-MIMO transmission can be indicated through the Number Of EHT-SIG Symbols Or Non-OFDMA Users field of U-SIG field 502 when EHT-SIG Compression field is set to 1. Specifically, a value of "0" in the Number Of EHT-SIG Symbols Or Non-OFDMA Users field indicates a SU transmission.

Example formats of the second part of Common field 702b of EHT-SIG field 504 are illustrated in tables 12 and 13. RU allocation information and supplemental punctured channel information may be included in a single field of the second part of the Common field 702b of EHT-SIG field 504 (e.g. RU Allocation Or Supplemental Punctured Channel Info field), where its field size depends on BW and compression mode, as illustrated in table 12. Alternatively, RU allocation information and supplemental punctured channel information can be contained in two separate fields of the second part of the Common field 702b (e.g. RU Allocation Info field and Supplemental Punctured Channel Info field, respectively), where field size of each RU Allocation Info field and Supplemental Punctured Channel Info field depends on BW, as illustrated in table 13. Specifically, the second part of Common field 702b of EHT-SIG field 504 may comprise a bitmap, for example 4 bits for the BW of 160MHz or 80+80MHz, 8 bits for the BW of 240MHz or 160+80MHz and 12 bits for the BW of 320MHz or 160+160MHz, to carry the supplemental punctured channel information. The bitmap indicates whether each 20MHz subchannel outside primary 80MHz is punctured.

The first part of the Common field 702a and the User field of the EHT-SIG field 504 may be identical to those depicted in tables 3 to 5. It should be appreciable and apparent to one of ordinary skilled in the art that the standard definitions, protocols and functions of all fields of Common field and User field listed in tables 3 to 5 can be obtained from the 802.11ax specification without further elaboration, unless specified otherwise in this specification.

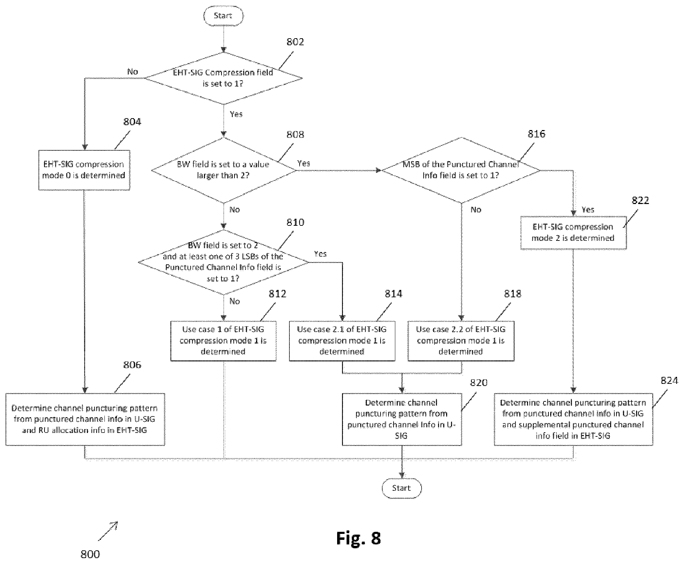

Fig. 8 depicts a flow diagram 800 illustrating processing of a received EHT basic PPDU 500 in an AP or a STA according to the second aspect. The process may start in step 802 through determining if EHT-SIG Compression field is set to "1" indicating a SU or MU-MIMO transmission. If the EHT-SIG Compression field is not set to "1", in step 804, EHT-SIG compression mode 0 is determined, and in step 806, a channel puncturing pattern that is applied to the received EHT basic PPDU 500 is determined from punctured channel information in U-SIG field 502 and RU allocation information in EHT-SIG field 504, and the process may end.

If the EHT-SIG Compression field is set to "1", step 808 is carried out. In step 808, it is determined if the BW field is set to a value larger than "2" (BW > 80MHz). If the BW field is not set to a value larger than "2", step 810 is carried out. In step 810, it is then determined if the BW field is set to "2" (BW = 80MHz) and at least one of three LSBs of Punctured Channel Info field is set to "1". If the BW is not set to "2" or all three LSBs of Punctured Channel Info field are set to "0", in step 812, use case 1 of EHT-SIG compression mode 1 is determined, i.e. full bandwidth SU or MU-MIMO transmission, and the process may end. If the BW field is set to "2" or at least one of 3 LSBs of Punctured Channel Info field is set to "1" indicating at least one 20MHz subchannel within 80MHz channel which is not primary 20MHz is punctured, use case 2.1 of EHT-SIG compression mode 1 is determined in step 814.

Returning to step 808, if it is determined that the BW field is set to a value larger than "2" (BW > 80MHz), step 816 is carried out. In step 816, it is further determined if the MSB of the Punctured Channel Info field is set to "1" indicating at least one 20MHz subchannel outside primary 80MHz is punctured. If the MSB of the Punctured Channel Info field is not set to "1", use case 2.2 of EHT-SIG compression mode 1 is determined in step 818. If the MSB of the Punctured Channel Info field is set to "1", EHT-SIG compression mode 2 is determined in step 822. When use case 2.1 or use case 2.2 of EHT-SIG compression mode 1 is determined in step 814 or 818 respectively, step 820 is carried out. In step 820, a channel puncturing pattern that is applied to the received EHT basic PPDU 500 is determined from punctured channel information in U-SIG field 502. On the other hand, when EHT-SIG compression mode 2 is determined in step 822, step 824 is carried out. In step 824, a channel puncturing pattern that is applied to the received EHT basic PPDU 500 is determined from punctured channel information in U-SIG field 502 and supplemental punctured channel information in EHT-SIG field 504.

According to a third aspect of the present disclosure, the abovementioned punctured channel signalling for punctured SU or MU-MIMO transmission can be applied to punctured OFDMA transmission as well. Specifically, when an EHT basic PPDU 500 is used for punctured OFDMA transmission, EHT-SIG field 504 comprises RU allocation information. If the punctured channel information of U-SIG field 502 is able to indicate a channel puncturing pattern that is applied to EHT basic PPDU 500, EHT-SIG field 504 does not comprise supplemental punctured channel information. If the punctured channel information of U-SIG field 502 is not able to indicate a channel puncturing pattern that is applied to EHT basic PPDU 500, EHT-SIG field 504 comprise supplemental punctured channel information. In this case, punctured channel information in U-SIG field 502 and supplemental punctured channel information in EHT-SIG field 504 jointly indicate a channel puncturing pattern that is applied to EHT basic PPDU 500. The effect of which is that less RU allocation information may be required in case of punctured OFDMA transmission and thus reduce EHT-SIG field signalling overhead.

In an aspect, the punctured channel information in U-SIG field 502 may be able to indicate all channel puncturing patterns that are allowed for up to a determined BW (e.g. 80MHz). When an EHT basic PPDU 500 is used for punctured SU, MU-MIMO or OFDMA transmission, if the BW of EHT basic PPDU 500 is less than or equal to the determined BW, supplemental punctured channel information is not required therefore EHT-SIG field 504 may not comprise supplemental punctured channel information.

In another aspect, the punctured channel information in U-SIG field 502 may be able to indicate all channel puncturing patterns that are allowed for up to a determined BW (e.g. 80MHz) and a part of channel puncturing patterns for BWs larger than the determined BW. When an EHT basic PPDU 500 is used for punctured SU, MU-MIMO or OFDMA transmission, if the BW of EHT basic PPDU 500 is less than or equal to the determined BW, supplemental punctured channel information is not required therefore EHT-SIG field 504 may not comprise supplemental punctured channel information. If the BW of EHT basic PPDU 500 is larger than the determined BW and the part of channel puncturing patterns for BWs larger than the determined BW, which the punctured channel information in U-SIG field 502 is able to indicate, includes a channel puncturing pattern that is applied to EHT basic PPDU 500, supplemental punctured channel information is not required therefore EHT-SIG field 504 may not comprise supplemental punctured channel information.

According to the third aspect, there may be four different EHT-SIG compression modes for EHT-SIG field 504 of EHT Basic PPDU 500: (i) compression mode 0 where the Common field of EHT-SIG field 504 comprises RU allocation information but does not comprise supplemental punctured channel information; (ii) compression mode 1 where the Common field of EHT-SIG field 504 does not comprise RU allocation information and supplemental punctured channel information; (iii) compression mode 2 where the Common field of EHT-SIG field 504 does not comprise RU allocation information but comprise supplemental punctured channel information; and (iv) compression mode 3 where the Common field of EHT-SIG field 504 comprises both RU allocation information and supplemental punctured channel information.

In particular, EHT-SIG compression mode 0 is enabled for an EHT basic PPDU 500 used for OFDMA transmission where supplemental punctured channel information in EHT-SIG field 504 is not required. Example use cases include an EHT basic PPDU 500 used for full bandwidth OFDMA transmission (use case 1 of compression mode 0); and punctured OFDMA transmission when the punctured channel information in U-SIG field 502 is able to indicate a channel puncturing pattern that is applied to EHT basic PPDU 500 (use case 2 of compression mode 0). Under EHT-SIG compression mode 0, the Common field of EHT-SIG field 504 comprises RU allocation information but does not comprise supplemental punctured channel information.

On the other hand, EHT-SIG compression mode 3 is enabled for an EHT basic PPDU 500 used for punctured OFDMA transmission where the punctured channel information in U-SIG field 502 is not able to indicate a channel puncturing pattern that is applied to EHT basic PPDU 500. Since the punctured channel information of U-SIG field 502 is not able to indicate the channel puncturing pattern that is applied to EHT basic PPDU 500, supplemental punctured channel information in EHT-SIG field 504 is required. Under EHT-SIG compression mode 3, the Common field of EHT-SIG field 504 comprises both RU allocation information and supplemental punctured channel information. Such implementation of compression mode 3 in case of punctured OFDMA transmission may advantageously reduce EHT-SIG field signaling overhead since no RU allocation information is required for punctured 20 MHz subchannel(s).

EHT-SIG compression mode 1 is enabled for an EHT basic PPDU 500 used for SU or MU-MIMO transmission where supplemental punctured channel information in EHT-SIG field 504 is not required. Example use cases include an EHT basic PPDU 500 used for full bandwidth SU or MU-MIMO transmission (use case 1 of compression mode 1); and an EHT basic PPDU 500 used for punctured SU or MU-MIMO transmission when the punctured channel information in U-SIG field 502 is able to indicate a channel puncturing pattern that is applied to EHT basic PPDU 500 (use case 2 of compression mode 1). Under EHT-SIG compression mode 1, the Common field 702b of EHT-SIG field 504 does not comprise both RU allocation information and supplemental punctured channel information.

EHT-SIG compression mode 2 is enabled for an EHT basic PPDU 500 used for SU or MU-MIMO transmission where supplemental punctured channel information is required in EHT-SIG 504. Example use case is an EHT basic PPDU 500 used for SU or MU-MIMO transmission where the punctured channel information in U-SIG field 502 is not able to indicate a channel puncturing pattern that is applied to EHT basic PPDU 500. Under EHT-SIG compression mode 2, the Common field 702b of EHT-SIG field 504 does not comprise RU allocation information but comprise supplemental punctured channel information.

The 2^{nd} use case of EHT-SIG compression mode 0 or compression mode 1 and the use case of EHT-SIG compression mode 2 or compression mode 3 depend on the content of punctured channel information in U-SIG field 502. For example, by assuming that the punctured channel information in U-SIG field 502 is able to indicate whether each 20MHz subchannel within primary 80MHz which is not primary 20MHz is punctured and whether at least one 20MHz subchannel outside primary 80MHz is punctured, the 2^{nd} use case of EHT-SIG compression mode 0 or 1 can be further divided into two use cases: an EHT basic PPDU used for punctured SU, MU-MIMO or OFDMA transmission when the BW of EHT basic PPDU 500 is 80MHz (use case 2.1); and an EHT basic PPDU 500 used for punctured SU, MU-MIMO or OFDMA transmission when the BW of EHT basic PPDU 500 is larger than 80MHz and no 20MHz subchannel outside primary 80MHz is punctured (use case 2.2).

Table 7 depicts an example format of U-SIG field 502 in EHT basic PPDU 500. U-SIG field 502 comprises two parts: U-SIG1 and U-SIG2, each of the two parts containing 26 data bits. U-SIG1 comprises all version independent bits such as a PHY Version Identifier field, an UL/DL Flag field, a BSS Color field, a TXOP Duration field and a BW field, a part of version dependent bits such as a PPDU Type field and some of EHT-SIG related bits such as an EHT-SIG Compression field and an EHT-SIG DCM field. U-SIG2 comprises the remaining version dependent bits such as an EHT-SIG EHT MCS field, a Number Of EHT-SIG Symbols Or Non-OFDMA Users field, a Spatial Reuse field, and a Punctured Channel Info field followed by reserved bits, a CRC field and tail bits. Unless specified otherwise in this specification, it should be appreciable and apparent to one of ordinary skilled in the art that the standard definitions, protocols and functions of most of the fields in U-SIG field 502 listed in table 7 can be obtained from the 802.11ax specification.

**Table 7: An example format of U-SIG field of EHT basic PPDU**

| | **Field name** | **Field size (bits)** |
|---|---|---|
| U-SIG1 | PHY Version Identifier | 3 |
| | UL/DL Flag | 1 |
| | BSS Color | 6 |
| | TXOP Duration | 7 |
| | BW | 3 |
| | Reserved | 2 |
| | PPDU type | 2 |
| | EHT-SIG Compression | 1 |
| | EHT-SIG DCM | 1 |
| U-SIG2 | EHT-SIG EHT MCS | 3 |
| | Number Of EHT-SIG Symbols Or non-OFDMA Users | 5 |
| | Spatial Reuse | 4 |
| | Punctured Channel Info | 4 |
| | CRC | 4 |
| | Tail | 6 |
| | Total | 52 |

Specifically, the Punctured Channel Info field is a 4-bit bitmap, of which three LSBs indicates whether each 20MHz subchannel within primary 80MHz which is not primary 20MHz is punctured and a MSB indicates whether at least one 20MHz subchannel outside primary 80MHz is punctured, which is reserved for the BW of 80MHz. the BW field of U-SIG field 502 is set to "0" for 20MHz, "1" for 40MHz, "2" for 80MHz, "3" for 160MHz and 80+80MHz, "4" for 240MHz and 160+80MHz, "5" for 320MHz and 160+160MHz.

In an aspect, the EHT-SIG compression mode may be indicated in EHT-SIG Compression field, Punctured Channel Info field and BW field of U-SIG field 502. Table 14 depicts how various EHT-SIG compression modes are indicated in EHT-SIG Compression field, Punctured Channel Info field and BW field of U-SIG field 502 according to the third aspect of the present disclosure. The EHT-SIG Compression field is set to "0" indicating an OFDMA transmission and "1" indicating a SU or MU-MIMO transmission.

Table 14 is plotted based on an assumption that punctured channel information in U-SIG field 502 is able to indicate whether each 20MHz subchannel within primary 80MHz which is not primary 20MHz is punctured and whether at least one 20MHz subchannel outside primary 80MHz is punctured. When the EHT-SIG Compression field value is "1", Punctured Channel Info field has all non-reserved bits set to "0" indicating a non-preamble puncturing mode of SU or MU-MIMO transmission, EHT-SIG compression mode 1 can be enabled under use case 1 regardless of the BW field value. When the EHT-SIG Compression field value is "1", at least one of 3 LSBs of Punctured Channel Info field is set to "1", and BW field value is "2" (BW = 80MHz), at least one 20MHz subchannel within 80MHz channel which is not primary 20MHz is punctured. In this case, a channel puncturing pattern that is applied to an EHT basic PPDU 500 used for punctured SU or MU-MIMO transmission can be determined solely based on punctured channel information in U-SIG field 502, and thus EHT-SIG compression mode 1 can be enabled for EHT basic PPDU 500 under use case 2.1. When the EHT-SIG Compression field value is "1", at least one of 3 LSBs of Punctured Channel Info field is set to "1" and MSB of Punctured Channel Info field is set to "0", and BW field value is larger than "2" (BW > 80MHz), at least one 20MHz subchannel within primary 80MHz which is not primary 20MHz is punctured and no 20MHz subchannel outside primary 80MHz is punctured. In this case, a channel puncturing pattern that is applied to an EHT basic PPDU 500 used for punctured SU or MU-MIMO transmission can also be determined solely based on punctured channel information in U-SIG field 502, and thus EHT-SIG compression mode 1 can be enabled for EHT basic PPDU 500 under use case 2.2.

When the EHT-SIG Compression field value is "1", MSB of Punctured Channel Info field is set to "1" and BW field value is larger than "2" (BW > 80MHz), at least one 20MHz subchannel outside primary 80 MHz is punctured. In this case, a channel puncturing pattern that is applied to an EHT basic PPDU 500 used for punctured SU or MU-MIMO transmission can be determined based on punctured channel information in U-SIG field 502 and supplemental punctured channel information in EHT-SIG field 504, and thus EHT-SIG compression mode 2 can be enabled for EHT basic PPDU 500.

When the EHT-SIG Compression field value is "0", Punctured Channel Information field has all non-reserved bits set to "0" indicating a non-preamble puncturing mode of OFDMA transmission, EHT-SIG compression mode 0 can be enabled under use case 1 regardless of the BW field value. When the EHT-SIG Compression field value is "0", at least one of 3 LSBs of Punctured Channel Info field is set to "1", and BW field value is "2" (BW = 80MHz), at least one 20MHz subchannel within 80MHz channel which is not primary 20MHz is punctured. In this case, a channel puncturing pattern that is applied to an EHT basic PPDU 500 used for punctured OFDMA transmission can be determined solely based on punctured channel information in U-SIG field 502, and thus EHT-SIG compression mode 0 can be enabled for EHT basic PPDU 500 under use case 2.1. When the EHT-SIG Compression field value is "1", at least one of 3 LSBs of Punctured Channel Info field is set to "1" and MSB of Punctured Channel Info field is set to "0", and BW field value is larger than "2" (BW > 80 MHz), at least one 20MHz subchannel within primary 80MHz which is not primary 20MHz is punctured and no 20MHz subchannel outside primary 80MHz is punctured. In this case, a channel puncturing pattern that is applied to an EHT basic PPDU 500 used for punctured OFDMA transmission can also be determined solely based on punctured channel information in U-SIG field 502, and thus EHT-SIG compression mode 0 can be enabled for EHT basic PPDU 500 under use case 2.2.

When the EHT-SIG Compression field value is "0", MSB of Punctured Channel Info field is set to "1" and BW field value is larger than "2" (BW > 80 MHz), at least one 20MHz subchannel outside primary 80 MHz is punctured. In this case, a channel puncturing pattern that is applied to an EHT basic PPDU 500 used for punctured OFDMA transmission can be determined based on punctured channel information in U-SIG field 502 and supplemental punctured channel information in EHT-SIG field 504, and thus EHT-SIG compression mode 3 can be enabled for EHT basic PPDU 500.

Further, SU or MU-MIMO transmission can be indicated through the Number Of EHT-SIG Symbols Or Non-OFDMA Users field of U-SIG field 502 when EHT-SIG Compression field is set to 1. Specifically, a value of "0" in the Number Of EHT-SIG Symbols Or Non-OFDMA Users field indicates a SU transmission.

The supplemental punctured channel information may be carried in a signaling field (e.g. Supplemental Punctured Channel Info field) in the first part of the Common field 702a of EHT-SIG field 504, where the field size depends on the BW of EHT basic PPDU 500. The Supplemental Punctured Channel Info field may contain supplemental punctured channel information on all 20MHz subchannels outside primary 80MHz. In one option, such Supplemental Punctured Channel Info field is independent of EHT-SIG content channels thus all EHT-SIG content channels contain the same Supplemental Punctured Channel Info field. The field may contain a bitmap which is 4 bits for the BW of 160MHz or 80+80MHz, 8 bits for the BW of 240MHz or 160+80MHz, or 12 bits for the BW of 320MHz or 160+160MHz. The bitmap indicates whether each 20MHz subchannel outside primary 80MHz is punctured.

In another option, the Supplemental Punctured Channel Info field in an EHT-SIG content channel may contain supplemental punctured channel information on 20MHz subchannels outside primary 80MHz which are corresponding to only the EHT-SIG content channel. Such Supplemental Punctured Channel Info field may be dependent on EHT-SIG content channel and thus is different among all EHT-SIG content channels. The field may contain a bitmap which is 2 bits for the BW of 160MHz or 80+80MHz, 4 bits for the BW for 240MHz or 160+80MHz or 6 bits for the BW for 320MHz or 160+160MHz. As such, the second implementation option of the field may advantageously reduce EHT-SIG field signaling overhead.

Further, RU allocation may be contained in the second part of the Common field 702b of EHT-SIG field 504 (e.g. RU Allocation Info field), where its field size depends on the values of BW, Punctured Channel Infor field and Supplemental Punctured Channel Info fields since RU allocation information for punctured 20 MHz subchannels is not required.

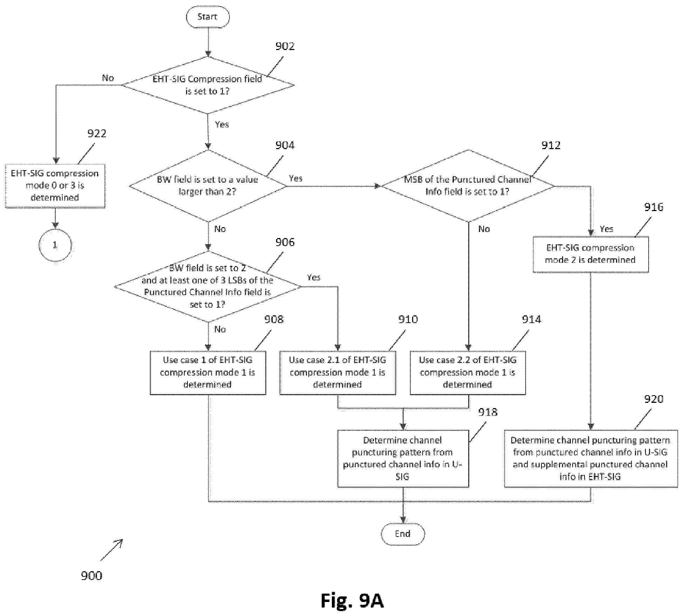

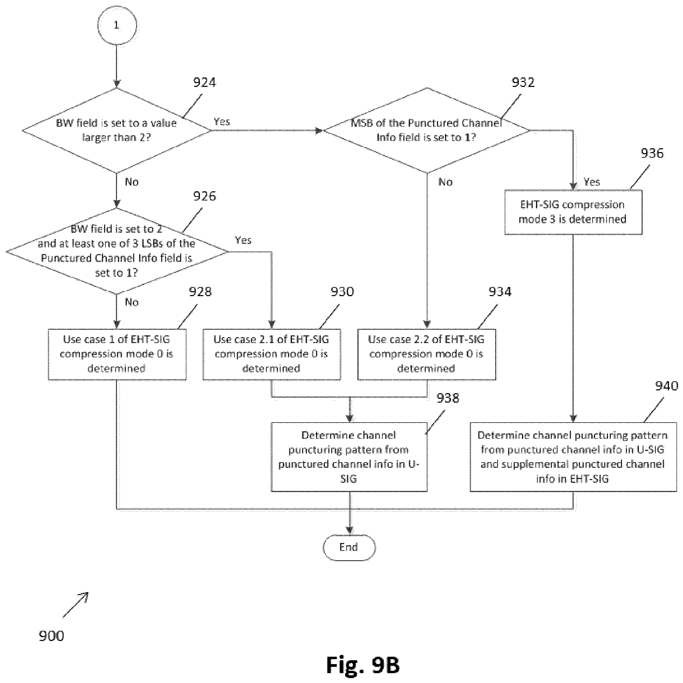

Figs 9A and 9B depicts a flow diagram 900 illustrating processing of a received EHT basic PPDU 500 in an AP or a STA according to the third aspect. The process may start in step 902 through determining if EHT-SIG Compression field is set to "1". If the EHT-SIG Compression field is set to "1" indicating a SU or MU-MIMO transmission, step 904 is carried out where EHT-SIG compression mode 1 or 2 is determined, whereas if the EHT-SIG Compression field is set to "0" indicating an OFDMA transmission, step 922 is carried out where EHT-SIG compression mode 0 or 3 is determined. Further processing for the received EHT basic PPDU 500 used for OFDMA transmission subsequent to step 922 will be discussed in Fig. 9B.

Returning to step 904, it is then determined if the BW field is set to a value larger than "2", a BW field value of "2" indicating a BW of 80MHz. If the BW field is not set to a value larger than "2", step 906 is carried out. In step 906, it is then determined if the BW field is set to "2" and at least one of three LSBs of Punctured Channel Info field is set to "1". If the BW field is not set to "2" or all three LSBs of Punctured Channel Info field are set to "0", in step 908, use case 1 of EHT-SIG compression mode 1 is determined, i.e. full bandwidth SU or MU-MIMO transmission, and the process may end. If the BW field is set to "2" or at least one of 3 LSBs of Punctured Channel Info field is set to "1 indicating at least one 20MHz subchannel within 80MHz channel which is not primary 20MHz is punctured, use case 2.1 of EHT-SIG compression mode 1 is determined in step 910.

Returning to step 904, if it is determined that the BW field is set to a value larger than "2", step 912 is carried out. In step 912, it is further determined if MSB of the Punctured Channel Info field is set to "1" indicating at least one 20MHz subchannel outside primary 80MHz is punctured. If the MSB of the Punctured Channel Info field is not set to "1", use case 2.2 of EHT-SIG compression mode 1 is determined in step 914. If the MSB of the Punctured Channel Info field is set to "1", EHT-SIG compression mode 3 is determined in step 916. When use case 2.1 or use case 2.2 of EHT-SIG compression mode 1 is determined in step 910 or 914 respectively, step 918 is carried out. In step 918, a channel puncturing pattern that is applied to the received EHT basic PPDU 500 is determined from punctured channel information in U-SIG field 502. On the other hand, when EHT-SIG compression mode 2 is determined in step 914, step 920 is carried out. In step 920, a channel puncturing pattern that is applied to the received EHT basic PPDU 500 is determined from punctured channel information in U-SIG field 502 and supplemental punctured channel information in EHT-SIG field 504.

Returning to step 922, after EHT-SIG compression mode 0 or 3 is determined, step 924 is carried out. In step 924, it is then determined if BW field is set to a value larger than "2". If the BW field is not set to a value larger than "2", step 926 is carried out. In step 926, it is then determined if the BW field is set to "2" and at least one of three LSBs of Punctured Channel Info field is set to "1". If the BW is not set to "2" or all three LSBs of Punctured Channel Info field are set to "0", in step 928, use case of 1 of EHT-SIG compression mode 0 is determined, i.e. full bandwidth OFDMA transmission, and the process may end. If the BW field is set to "2" or at least one of 3 LSBs of Punctured Channel Info field is set to "1 indicating at least one 20MHz subchannel within 80MHz channel which is not primary 20MHz is punctured, use case 2.1 of EHT-SIG compression mode 0 is determined in step 930.

Returning to step 924, if it is determined that BW field is set to a value larger than "2", step 932 is carried out. In step 932, it is further determined if MSB of the Punctured Channel Info field is set to "1" indicating at least one 20MHz subchannel outside primary 80MHz is punctured. If the MSB of the Punctured Channel Info field is not set to "1", use case 2.2 of EHT-SIG compression mode 0 is determined in step 934. If the MSB of the Punctured Channel Info field is set to "1", EHT-SIG compression mode 3 is determined in step 936. When use case 2.1 or use case 2.2 of EHT-SIG compression mode 0 is determined in step 930 or 934 respectively, step 938 is carried out. In step 938, a channel puncturing pattern that is applied to the received EHT basic PPDU 500 is determined from punctured channel information in U-SIG field 502. On the other hand, when EHT-SIG compression mode 3 is determined in step 936, step 940 is carried out. In step 940, a channel puncturing pattern that is applied to the received EHT basic PPDU 500 is determined from punctured channel information in U-SIG field 502 and supplemental punctured channel information in EHT-SIG field 504.

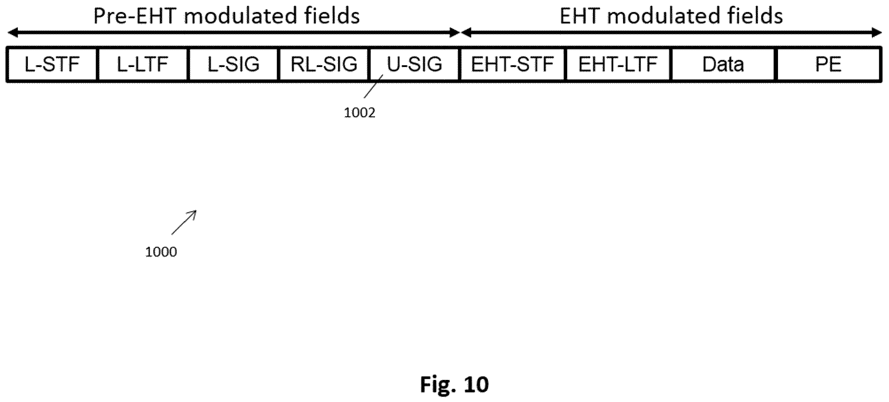

Fig. 10 depicts an example format of an EHT TB PPDU 1000. The EHT TB PPDU 1000 has a similar structure as that of EHT basic PPDU 500 but without EHT-SIG field 504. The EHT TB PPDU 1000 may include a L-STF, a L-LTF, a L-SIG field, a FIF, a U-SIG field 1002, an EHT-STF, an EHT-LTF, a Data field and a PE field. The L-STF, the L-LTF, the L-SIG, the RL-SIG and the U-SIG field 602 may be grouped as pre-EHT modulated fields, while the EHT-STF, the EHT-LTF, the Data field and the PE field may be grouped as EHT modulated fields. An EHT TB PPDU can be used for trigger-based communications that is in response to a soliciting triggering frame. For example, EHT TB PPDUs can be used for transmitting BA frames 414, 415 by STAs 404, 406 when EHT basic PPDU 410 is transmitted to STAs 404, 406 and contains one or more triggering frame, as illustrated in Fig. 4.

Table 8 depicts an example format of U-SIG field 1002 of EHT TB PPDU 1000. Similar to EHT basic PPDU 500, the U-SIG field 1002 comprises two parts, U-SIG1 and U-SIG2, each comprising 26 data bits. In this aspect, all version independent bits may be included in U-SIG1. The first part of U-SIG field 1002, i.e. U-SIG1, comprises a PHY Version Identifier field, a UL/DL Flag field, a BSS Color field, a TXOP Duration field, a BW field and a PPDU Type field. The PHY Version Identifier field is used to identify the exact PHY version starting with 802.11be. The second part of U-SIG field 1002, i.e. U-SIG2, comprises Spatial Reuse 1 to 4 fields, followed by a CRC field and tail bits. Information of some of the field in U-SIG field 602 (e.g. BW field and Spatial Reuse 1 to 4 fields) can be copied from the corresponding triggering frame soliciting the transmission of EHT TB PPDU 1000. It should be appreciated and apparent to one of ordinary skilled in the art that that the standard definitions, protocols and functions of most of the fields in U-SIG field 1002 of EHT TB PPDU 1000 can be obtained from the 802.11ax specification.

**Table 8: An example format of U-SIG field in EHT TB PPDU**

| | **Field name** | **Field size (bits)** |
|---|---|---|
| U-SIG1 | PHY Version Identifier | 3 |
| | UL/DL Flag | 1 |
| | BSS Color | 6 |
| | TXOP Duration | 7 |
| | BW | 3 |
| | Reserved | 2 |
| | PPDU Type | 2 |
| | Reserved | 2 |
| U-SIG2 | Spatial Reuse 1 | 4 |
| | Spatial Reuse 2 | 4 |
| | Spatial Reuse 3 | 4 |
| | Spatial Reuse 4 | 4 |
| | CRC | 4 |
| | Tail | 6 |
| | Total | 52 |

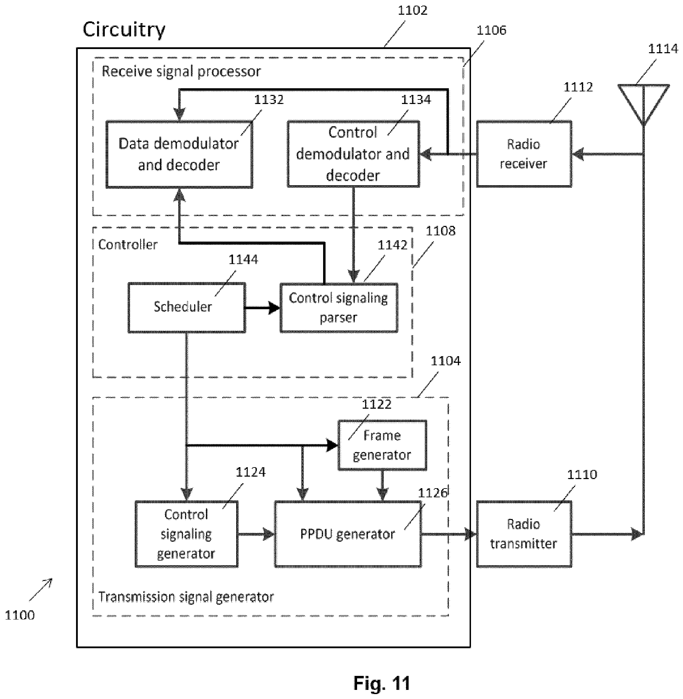

Fig. 11 shows a configuration of a communication device 1100, for example an AP according to various aspects. Similar to the schematic example of the communication apparatus 300 shown in Fig 3, the communication apparatus 1100 includes circuitry 1102, at least one radio transmitter 1110, at least one radio receiver 1112, at least one antenna 1114 (for the sake of simplicity, only one antenna is depicted in Fig. 11). The circuitry 1102 may include at least one controller 1108 for use in software and hardware aided execution of tasks that the controller 1108 is designed to perform communication for control singling. The circuitry 1102 may further include a transmission signal generator 1104 and a receive signal processor 1106. The at least one controller 1108 may control the transmission signal generator 1104 and the receive signal processor 1106. The transmission signal generator 1104 may include a frame generator 1122, a control signaling generator 1124, and a PPDU generator 1126. The frame generator 1122 may generate MAC frames, e.g. data frames or triggering frames. The control signaling generator 1124 may generate control signaling fields of PPDUs to be generated (e.g. U-SIG fields and EHT-SIG fields of EHT basic PPDUs). The PPDU generator 1126 may generate PPDUs (e.g. EHT basic PPDUs).

The receive signal processor 1106 may include a data demodulator and decoder 1134, which may demodulate and decode data portions of the received signals (e.g. data fields of EHT basic PPDUs or EHT TB PPDUs). The receive signal processor 1106 may further include a control demodulator and decoder 1134, which may demodulate and decode control signaling portions of the received signals (e.g. U-SIG fields of EHT basic PPDUs or EHT TB PPDUs and EHT-SIG fields of EHT basic PPDUs). The at least one controller 1108 may include a control signal parser 1142 and a scheduler 1144. The scheduler 1144 may determine RU information and user-specific allocation information for allocations of downlink SU or MU transmissions and triggering information for allocations of uplink MU transmissions. The control signal parser 1142 may analyse the control signaling portions of the received signals and the triggering information for allocations of uplink MU transmissions shared by the scheduler 1144 and assist the data demodulator and decoder 1132 in demodulating and decoding the data portions of the received signals.

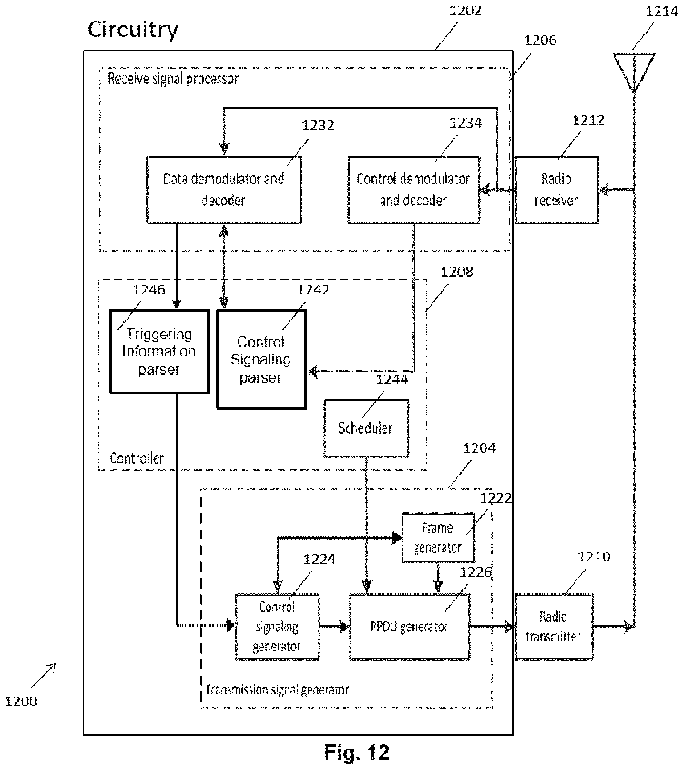

Fig. 10 shows a configuration of a communication apparatus 1200, for example a STA according to various aspects. Similar to the schematic example of communication apparatus 300 shown in Fig 3, the communication apparatus 1200 includes circuitry 1202, at least one radio transmitter 1210, at least one radio receiver 1212, at least one antenna 1214 (for the sake of simplicity, only one antenna is depicted in Fig. 12). The circuitry 1202 may include at least one controller 1208 for use in software and hardware aided execution of tasks that the controller 1208 is designed to perform communication for control signaling. The circuitry 1208 may further include a receive signal processor 1204 and a transmission signal generator 1206. The at least one controller 1208 may control the receive signal processor 1204 and the transmission signal generator 1206. The receive signal processor 1204 may include a data demodulator and decoder 1232 and a control demodulator and decoder 1234. The control demodulator and decoder 1234 may demodulate and decode control signaling portions of the received signals (e.g. U-SIG fields and EHT-SIG fields of EHT basic PPDUs). The data demodulator and decoder 1232 may demodulate and decode data portions of the received signals (e.g. data fields of ETH basic PPDUs) according to RU information and user-specific allocation information of its own allocations.

The at least one controller 1208 may include a control signal parser 1242, and a scheduler 1244 and a trigger information parser 1246. The control signal parser 1242 may analyse the control signaling portions of the received signals (e.g. U-SIG fields and EHT-SIG fields of EHT basic PPDUs) and assist the data demodulator and decoder 1232 in demodulating and decoding the data portions of the received signals (e.g. data fields of EHT basic PPDUs). The triggering information parser 1248 may analyse the triggering information for its own uplink allocations from the received triggering frames contained in the data portions of the received signals. The transmission signal generator 1204 may include a control signaling generator 1224, which may generate control signaling fields of PPDUs to be generated (e.g. U-SIG fields of EHT basic PPDUs or EHT TB PPDUs). The transmission signal generator 1204 may further include a PPDU generator 1226, which generate PPDUs (e.g. EHT basic PPDUs or EHT TB PPDUs). The transmission signal generator 1204 may further include a frame generator 1222 may generate MAC frames, e.g. data frames.

As described above, the aspects of the present disclosure provide an advanced communication system, communication methods and communication apparatuses for control signalling in MIMO WLAN networks of an extremely high throughput and improve spectral efficiency in MIMO WLAN networks.

The present disclosure can be realized by software, hardware, or software in cooperation with hardware. Each functional block used in the description of each aspect described above can be partly or entirely realized by an LSI such as an integrated circuit, and each process described in each aspect may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g. automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

It will be understood that while some properties of the various aspects have been described with reference to a device, corresponding properties also apply to the methods of various aspects, and vice versa.

**Table 9: An example format of second part of the Common field**

| **Field name** | **Field size (bits)** | | | | | | | | |
|---|---|---|---|---|---|---|---|---|---|
| | **EHT-SIG compression mode 0** | | | | | **EHT-SIG compression mode 2** | | | |
| | **BW = 20/40 MHz** | **BW = 80 MHz** | **BW = 160/80+ 80 MHz** | **BW = 240/160+80 MHz** | **BW = 320/160+160 MHz** | **BW = 80 MHz** | **BW = 160/80+ 80 MHz** | **BW = 240/160+80 MHz** | **BW = 320/160+160 MHz** |
| RU Allocation or Supplemental Punctured Channel Info | 9 | 19 | 37 | 74/37 | 74 | 3 | 7 | 11 | 15 |

**Table 10: Another example format of second part of the Common field**

| **Field name** | **Field size (bits)** | | | | | | | | |
|---|---|---|---|---|---|---|---|---|---|
| | **EHT-SIG compression mode 0** | | | | | **EHT-SIG compression mode 2** | | | |
| | **BW = 20/40 MHz** | **BW = 80 MHz** | **BW = 160/80+ 80 MHz** | **BW = 240/160+80 MHz** | **BW = 320/160+160 MHz** | **BW = 80 MHz** | **BW = 160/80+ 80 MHz** | **BW = 240/160+80 MHz** | **BW = 320/160+160 MHz** |
| RU Allocation | 9 | 19 | 37 | 74/37 | 74 | - | - | - | - |
| Supplemental Punctured Channel Info | - | - | - | - | - | 3 | 7 | 11 | 15 |

**Table 11: Various EHT-SIG compression modes in relation to EHT-SIG Compression field value, Punctured Channel Info field value and BW field value**

| **EHT-SIG Compression field value** | **Punctured Channel Info field value** | **BW field value** | **Meaning** |
|---|---|---|---|
| 0 | Any | 0 to 5 (i.e. any BW) | EHT-SIG compression mode 0 |
| 1 | All non-reserved bits are set to 0 | 0 to 5 (i.e. any BW) | EHT-SIG compression mode 1 (use case 1) |
| | At least one of 3 LSBs is set to 1 | 2 (i.e. BW = 80 MHz) | EHT-SIG compression mode 1 (use case 2.1) |
| | At least one of 3 LSBs is set to 1 and MSB is set to 0 | 3 to 5 (i.e. BW > 80 MHz) | EHT-SIG compression mode 1 (use case 2.2) |
| 1 | MSB is set to 1 | 3 to 5 (i.e. BW > 80 MHz) | EHT-SIG compression mode 2 |

**Table 12: An example format of second part of the Common field**

| **Field name** | **Field size (bits)** | | | | | | | |
|---|---|---|---|---|---|---|---|---|
| | **EHT-SIG compression mode 0** | | | | | **EHT-SIG compression mode 2** | | |
| | **BW = 20/40 MHz** | **BW = 80 MHz** | **BW = 160/80+ 80 MHz** | **BW = 240/160+80 MHz** | **BW = 320/160+160 MHz** | **BW = 160/80+ 80 MHz** | **BW = 240/160+80 MHz** | **BW = 320/160+160 MHz** |
| RU Allocation or Supplemental Punctured Channel Info | 9 | 19 | 37 | 74/37 | 74 | 4 | 8 | 12 |

**Table 13: Another example format of second part of the Common field**

| **Field name** | **Field size (bits)** | | | | | | | |
|---|---|---|---|---|---|---|---|---|
| | **EHT-SIG compression mode 0** | | | | | **EHT-SIG compression mode 2** | | |
| | **BW = 20/40 MHz** | **BW = 80 MHz** | **BW = 160/80+ 80 MHz** | **BW = 240/160+80 MHz** | **BW = 320/160+160 MHz** | **BW = 160/80+ 80 MHz** | **BW = 240/160+80 MHz** | **BW = 320/160+160 MHz** |
| RU Allocation | 9 | 19 | 37 | 74/37 | 74 | - | - | - |
| Supplemental Punctured Channel Info | - | - | - | - | - | 4 | 8 | 12 |

**Table 14: Various EHT-SIG compression modes in relation to EHT-SIG Compression field value, Punctured Channel Info field value and BW field value**

| **EHT-SIG Compression field value** | **Punctured Channel Info field value** | **BW field value** | **Meaning** |
|---|---|---|---|
| 0 | All non-reserved bits are set to 0 | 0 to 5 (i.e. any BW) | EHT-SIG compression mode 0 (use case 1) |
| | At least one of 3 LSBs is set to 1 | 2 (i.e. BW = 80 MHz) | EHT-SIG compression mode 0 (use case 2.1) |
| | At least one of 3 LSBs is set to 1 and MSB is set to 0 | 3 to 5 (i.e. BW > 80 MHz) | EHT-SIG compression mode 0 (use case 2.2) |
| | Any | 0 to 5 (i.e. any BW) | EHT-SIG compression mode 3 |
| 1 | All non-reserved bits are set to 0 | 0 to 5 (i.e. any BW) | EHT-SIG compression mode 1 (use case 1) |
| | At least one of 3 LSBs is set to 1 | 2 (i.e. BW = 80 MHz) | EHT-SIG compression mode 1 (use case 2.1) |
| | At least one of 3 LSBs is set to 1 and MSB is set to 0 | 3 to 5 (i.e. BW > 80 MHz) | EHT-SIG compression mode 1 (use case 2.2) |
| | Any | 0 to 5 (i.e. any BW) | EHT-SIG compression mode 2 |

## Claims

1. An integrated circuit of an access point, which comprises circuitry configured to:
generating an Extremely High Throughput Physical layer Protocol Data Unit, EHT PPDU (500), comprising a Universal Signal, U-SIG, field (502) and an Extremely High Throughput Signal, EHT-SIG, field (504), wherein the U-SIG field comprises punctured channel information, and the EHT-SIG field comprises supplemental punctured channel information, wherein the EHT-SIG field comprises a Common field and a User Specific field; and
control transmitting the EHT PPDU,
**characterized in that**
when the EHT PPDU is used for punctured single-user, SU, or multi-user, MU, multiple input multiple output, MIMO, transmission and the punctured channel information is able to indicate a channel puncturing pattern that is applied to the EHT PPDU, the EHT-SIG field does not comprise the supplemental punctured channel information.

2. The integrated circuit of claim 1, wherein the punctured channel information is able to indicate all channel puncturing patterns that are allowed for up to a determined bandwidth.

3. The integrated circuit of claim 1, wherein the punctured channel information is able to indicate all channel puncturing patterns that are allowed for up to a determined bandwidth and a part of channel puncturing patterns for bandwidths which are larger than the determined bandwidth.

4. The integrated circuit of claim 1, wherein the punctured channel information and bandwidth information are indicated in a single signalling field of the U-SIG field.

5. The integrated circuit of claim 1, wherein the punctured channel information and bandwidth information are indicated in respective signalling fields of the U-SIG field.

6. The integrated circuit of claim 1, wherein when the EHT PPDU is used for punctured Orthogonal Frequency Division Multiple Access, OFDMA, transmission and the punctured channel information is not able to indicate a channel puncturing pattern that is applied to the EHT PPDU, the EHT-SIG field comprises the supplemental punctured channel information that, together with the punctured channel information, indicates the channel puncturing pattern that is applied to the EHT PPDU.

7. An integrated circuit of an access point, which comprises circuitry configured to:
control receiving an Extremely High Throughput Physical layer Protocol Data Unit, EHT PPDU (500) comprising a Universal Signal, U-SIG, field (502) and an Extremely High Throughput Signal, EHT-SIG, field (504), wherein the U-SIG field comprises punctured channel information, and the EHT-SIG field comprises supplemental punctured channel information, wherein the EHT-SIG field comprises a Common field and a User Specific field; and
processing the EHT PPDU
**characterized in that**
when the EHT PPDU is used for punctured single-user, SU, or multi-user, MU, multiple input multiple output, MIMO transmission and the punctured channel information is able to indicate a channel puncturing pattern that is applied to the EHT PPDU, the EHT-SIG field does not comprise the supplemental punctured channel information.

8. The integrated circuit of claim 7, wherein the punctured channel information is able to indicate all channel puncturing patterns that are allowed for up to a determined bandwidth.

9. The integrated circuit of claim 7, wherein the punctured channel information is able to indicate all channel puncturing patterns that are allowed for up to a determined bandwidth and a part of channel puncturing patterns for bandwidths which are larger than the determined bandwidth.

10. The integrated circuit of claim 7, wherein the punctured channel information and bandwidth information are indicated in a single signalling field of the U-SIG field.

11. The integrated circuit of claim 7, wherein the punctured channel information and bandwidth information are indicated in respective signalling fields of the U-SIG field.

12. The integrated circuit of claim 7, wherein when the EHT PPDU is used for punctured Orthogonal Frequency Division Multiple Access, OFDMA, transmission and the punctured channel information is not able to indicate a channel puncturing pattern that is applied to the EHT PPDU, the EHT-SIG field comprises the supplemental punctured channel information that, together with the punctured channel information, indicates the channel puncturing pattern that is applied to the EHT PPDU.

## Patentansprüche

1. Integrierte Schaltung eines Zugriffspunkts, die einen Schaltungsaufbau umfasst, ausgebildet zum:
Erzeugen einer Extremely High Throughput Physical Layer Protocol Data Unit (EHT PPDU) (500), umfassend ein Universal-Signal-(U-SIG-)Feld (502) und ein Extremely-High-Throughput-Signal-(EHT-SIG-)Feld (504), wobei das U-SIG-Feld Punctured-Channel-Informationen umfasst und das EHT-SIG-Feld zusätzliche Punctured-Channel-Informationen umfasst, wobei das EHT-SIG-Feld ein allgemeines Feld und ein benutzerspezifisches Feld umfasst; und
Steuern des Sendens der EHT PPDU,
**dadurch gekennzeichnet, dass**
wenn die EHT PPDU für das Punctured-Single-User-(SU-) oder Multi-User-(MU-)Multiple-Input-Multiple-Output-(MIMO-)Senden verwendet wird und die Punctured-Channel-Informationen ein Channel-Puncturing-Muster angeben können, das auf die EHT PPDU angewendet wird, das EHT-SIG-Feld nicht die zusätzlichen Punctured-Channel-Informationen umfasst.

2. Integrierte Schaltung nach Anspruch 1, wobei die Punctured-Channel-Informationen alle Channel-Puncturing-Muster angeben können, die bis zu einer bestimmten Bandbreite zulässig sind.

3. Integrierte Schaltung nach Anspruch 1, wobei die Punctured-Channel-Informationen alle Channel-Puncturing-Muster, die bis zu einer bestimmten Bandbreite erlaubt sind, und einen Teil der Channel-Puncturing-Muster für Bandbreiten, die größer als die bestimmte Bandbreite sind, angeben können.

4. Integrierte Schaltung nach Anspruch 1, wobei die Punctured-Channel-Informationen und die Bandbreiteninformationen in einem einzigen Signalisierungsfeld des U-SIG-Felds angegeben sind.

5. Integrierte Schaltung nach Anspruch 1, wobei die Punctured-Channel-Informationen und die Bandbreiteninformationen in jeweiligen Signalisierungsfeldern des U-SIG-Felds angegeben sind.

6. Integrierte Schaltung nach Anspruch 1, wobei, wenn die EHT PPDU für das Punctured-Orthogonal-Frequency-Division-Multiple Access-(OFDMA-)Senden verwendet wird und die Punctured-Channel-Informationen nicht ein Channel-Puncturing-Muster angeben können, das auf die EHT PPDU angewendet wird, das EHT-SIG-Feld die zusätzlichen Punctured-Channel-Informationen umfasst, die zusammen mit den Punctured-Channel-Informationen das Channel-Puncturing-Muster angeben, das auf die EHT PPDU angewendet wird.

7. Integrierte Schaltung eines Zugriffspunkts, die einen Schaltungsaufbau umfasst, ausgebildet zum:
Steuern des Empfangens einer Extremely High Throughput Physical Layer Protocol Data Unit (EHT PPDU) (500), umfassend ein Universal-Signal-(U-SIG-)Feld (502) und ein Extremely-High-Throughput-Signal-(EHT-SIG-)Feld (504), wobei das U-SIG-Feld Punctured-Channel-Informationen umfasst und das EHT-SIG-Feld zusätzliche Punctured-Channel-Informationen umfasst, wobei das EHT-SIG-Feld ein allgemeines Feld und ein benutzerspezifisches Feld umfasst; und
Verarbeiten der EHT PPDU,
**dadurch gekennzeichnet, dass**
wenn die EHT PPDU für das Punctured-Single-User-(SU-) oder Multi-User-(MU-)Multiple-Input-Multiple-Output-(MIMO-)Senden verwendet wird und die Punctured-Channel-Informationen ein Channel-Puncturing-Muster angeben können, das auf die EHT PPDU angewendet wird, das EHT-SIG-Feld nicht die zusätzlichen Punctured-Channel-Informationen umfasst.

8. Integrierte Schaltung nach Anspruch 7, wobei die Punctured-Channel-Informationen alle Channel-Puncturing-Muster angeben können, die bis zu einer bestimmten Bandbreite zulässig sind.

9. Integrierte Schaltung nach Anspruch 7, wobei die Punctured-Channel-Informationen alle Channel-Puncturing-Muster, die bis zu einer bestimmten Bandbreite erlaubt sind, und einen Teil der Channel-Puncturing-Muster für Bandbreiten, die größer als die bestimmte Bandbreite sind, angeben können.

10. Integrierte Schaltung nach Anspruch 7, wobei die Punctured-Channel-Informationen und die Bandbreiteninformationen in einem einzigen Signalisierungsfeld des U-SIG-Felds angegeben sind.

11. Integrierte Schaltung nach Anspruch 7, wobei die Punctured-Channel-Informationen und die Bandbreiteninformationen in jeweiligen Signalisierungsfeldern des U-SIG-Felds angegeben sind.

12. Integrierte Schaltung nach Anspruch 7, wobei, wenn die EHT PPDU für das Punctured-Orthogonal-Frequency-Division-Multiple Access-(OFDMA-)Senden verwendet wird und die Punctured-Channel-Informationen nicht ein Channel-Puncturing-Muster angeben können, das auf die EHT PPDU angewendet wird, das EHT-SIG-Feld die zusätzlichen Punctured-Channel-Informationen umfasst, die zusammen mit den Punctured-Channel-Informationen das Channel-Puncturing-Muster angeben, das auf die EHT PPDU angewendet wird.

## Revendications

1. Circuit intégré d'un point d'accès, qui comprend des circuits configurés pour:
générer une unité de données de protocole de couche physique à débit extrêmement élevé, EHT PPDU (500), comprenant un champ de signal universel, U-SIG (502), et un champ de signal à débit extrêmement élevé, EHT-SIG2 (504), dans lequel le champ U-SIG comprend des informations de canal ponctuées, et le champ EHT-SIG comprend des informations de canal ponctuées supplémentaires, le champ EHT-SIG comprenant un champ commun et un champ spécifique à l'utilisateur; et
commander la transmission de l'EHT PPDU,
**caractérisé en ce que**
lorsque la PPDU EHT est utilisée pour une transmission MIMO (multiple input multiple output) ponctuée à utilisateur unique (SU) ou multi-utilisateurs (MU) et que les informations de canal ponctué sont capables d'indiquer un motif de ponctuation de canal appliqué à la PPDU EHT, le champ EHT-SIG ne comprend pas les informations de canal ponctué supplémentaires.

2. Circuit intégré selon la revendication 1, dans lequel les informations de canal ponctué sont capables d'indiquer tous les motifs de ponctuation de canal autorisés jusqu'à une largeur de bande déterminée.

3. Circuit intégré selon la revendication 1, dans lequel les informations de canal ponctué sont capables d'indiquer tous les motifs de ponctuation de canal autorisés jusqu'à une bande passante déterminée, ainsi qu'une partie des motifs de ponctuation de canal pour des bandes passantes supérieures à la bande passante déterminée.

4. Circuit intégré selon la revendication 1, dans lequel les informations de canaux perforés et les informations de bande passante sont indiquées dans un seul champ de signalisation du champ U-SIG.

5. Circuit intégré selon la revendication 1, dans lequel les informations de canal perforé et les informations de bande passante sont indiquées dans des champs de signalisation respectifs du champ U-SIG .

6. Circuit intégré selon la revendication 1, dans lequel, lorsque la PPDU EHT est utilisée pour une transmission OFDMA (Orthogonal Frequency Division Multiple Access) perforée et que les informations de canal perforé ne permettent pas d'indiquer un motif de perforation de canal appliqué à la PPDU EHT, le champ EHT-SIG comprend les informations supplémentaires sur le canal perforé qui, conjointement avec les informations sur le canal perforé, indiquent le motif de perforation de canal appliqué à la PPDU EHT.

7. Circuit intégré d'un point d'accès, qui comprend des circuits configurés pour :
contrôler la réception d'une unité de données de protocole de couche physique à débit extrêmement élevé, EHT PPDU (500), comprenant un champ de signal universel, U-SIG (502), et un champ de signal à débit extrêmement élevé, EHT-SIG7 (504), dans lequel le champ U-SIG comprend des informations de canal perforé, et le champ EHT-SIG comprend des informations de canal perforé supplémentaires, le champ EHT-SIG comprenant un champ commun et un champ spécifique à l'utilisateur; et
traiter l'EHT PPDU
**caractérisé en ce que**
lorsque la PPDU EHT est utilisée pour une transmission MIMO (multiple input multiple output) ponctuée à utilisateur unique (SU) ou multi-utilisateurs (MU) et que les informations de canal ponctué sont capables d'indiquer un motif de ponctuation de canal appliqué à la PPDU EHT, le champ EHT-SIG ne comprend pas les informations de canal ponctué supplémentaires.

8. Circuit intégré selon la revendication 7, dans lequel les informations de canal ponctué sont capables d'indiquer tous les motifs de ponctuation de canal autorisés jusqu'à une largeur de bande déterminée.

9. Circuit intégré selon la revendication 7, dans lequel les informations de canal ponctué sont capables d'indiquer tous les motifs de ponctuation de canal autorisés jusqu'à une bande passante déterminée, ainsi qu'une partie des motifs de ponctuation de canal pour des bandes passantes supérieures à la bande passante déterminée.

10. Circuit intégré selon la revendication 7, dans lequel les informations de canaux perforés et les informations de bande passante sont indiquées dans un seul champ de signalisation du champ U-SIG.

11. Circuit intégré selon la revendication 7, dans lequel les informations de canal perforé et les informations de bande passante sont indiquées dans des champs de signalisation respectifs du champ U-SIG.

12. Circuit intégré selon la revendication 7, dans lequel, lorsque la PPDU EHT est utilisée pour une transmission OFDMA (Orthogonal Frequency Division Multiple Access) perforée et que les informations de canal perforé ne permettent pas d'indiquer un motif de perforation de canal appliqué à la PPDU EHT, le champ EHT-SIG comprend les informations supplémentaires sur le canal perforé qui, conjointement avec les informations sur le canal perforé, indiquent le motif de perforation de canal appliqué à la PPDU EHT.
